(19) Europäisches Patentamt
European Patent Office
Office européen des brevets

(11) EP 4 061 857 B1

(12) EUROPEAN PATENT SPECIFICATION

(45) Date of publication and mention of the grant of the patent:
**06.05.2026 Bulletin 2026/19**

(21) Application number: **21713689.4**

(22) Date of filing: **25.03.2021**

(51) International Patent Classification (IPC):
***C08F 2/42*** *(2006.01)* ***C08F 220/18*** *(2006.01)*
***C08F 2/26*** *(2006.01)*

(52) Cooperative Patent Classification (CPC):
(C-Sets available)
**C08F 220/1818; C08F 2/26; C08K 5/36** (Cont.)

(86) International application number:
**PCT/EP2021/057730**

(87) International publication number:
**WO 2021/191348 (30.09.2021 Gazette 2021/39)**

(54) **POLYMER DISPERSION MADE FROM (METH)ACRYLATES HAVING LONG SIDE CHAINS**

POLYMERDISPERSION AUS (METH)ACRYLATEN MIT LANGEN SEITENKETTEN

DISPERSION POLYMÈRE DE (MÉTH)ACRYLATES À CHAÎNES LATÉRALES LONGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2020 EP 20165773**

(43) Date of publication of application:
**28.09.2022 Bulletin 2022/39**

(73) Proprietor: **Evonik Operations GmbH**
**45128 Essen (DE)**

(72) Inventors:
- **SCHENDERLEIN, Helge**
**63674 Altenstadt (DE)**
- **SCHMITT, Gerold**
**63743 Aschaffenburg (DE)**
- **EBERT, Martina**
**64807 Dieburg (DE)**
- **OSCHMANN, Hans-Jörg**
**48429 Rheine (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**CN-A- 108 047 868**
**US-A1- 2007 244 239**
**US-A1- 2018 230 348**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1818, C08F 220/06;**
**C08K 5/36, C08L 33/06**

## Description

Field of the invention

The invention, as defined in the appended claims, relates to polymer dispersions made from (meth)acrylates having long side chains that can be used as paraffin inhibitors and have good low-temperature applicability here.

Prior art

Flow aids are commonly used to improve the flow properties of crude oils and/or mineral oil fractions. They are especially necessary for allowing the flowability of the oil even at low temperatures, at which the untreated oil is already solid or viscous as a result of precipitation or crystallization of dissolved solid constituents, such as longer-chain paraffins and/or asphaltenes, or solid deposits occur which, for example, lead to a narrowing of the pipelines.

Here, the flow aid can lower the pour point of the (crude) oil, and this prevents solidification of the oil below a certain temperature. In this case, the flow improver acts as a co-called pour point depressant. Furthermore, the flow aid can lead to an inhibition or reduction of paraffin deposits on (cold) surfaces (e.g., the inner wall of pipelines). In this case, the flow aid acts as a so-called paraffin inhibitor. One or else both of these properties may be important, depending on the (crude) oil.

The performance of a flow aid is to be rated according to its ability to shift the pour point of the oil to lower temperatures and/or its ability to reduce the amount of deposited wax on (cold) surfaces.

Polymers which have long side chains (i.e. alkyl side chains ≥ C16) and act as crystallization inhibitors by cocrystallization with the longer-chain paraffins are commonly used as flow aids. The aforementioned polymers are commonly (co)polymers of (meth)acrylates having long side chains of the general formula (1)

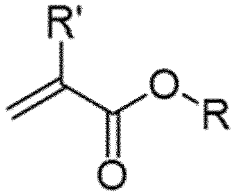

(1)

where R = $C_nH_{2n+1}$ with n ≥ 16 and R' = $CH_3$ or H. Since such polymers are present as solids at the customary use temperatures, but must be distributed as homogeneously as possible in the oil in the end use, they are customarily used as solutions in organic solvents, usually in aromatic organic solvents. Besides the negative properties due to said organic solvents such as flammability and toxicity, such polymer solutions have further disadvantages. For instance, the flow aids themselves are not pourable at low temperatures owing to the side-chain crystallization of the polymers, and this hampers or prevents metering at low temperatures into the oil to be treated. To counteract this problem, either the tank farms and supply lines for metering the flow aid can be heated, this being associated with high energy costs, or the inherent pour point of the flow aid can be lowered in a certain range by further dilution with organic solvent to < 10% active content. This however likewise being associated with high additional costs (solvent costs, transport costs, greater need of storage space, additional safety measures due to the flammability of the solvents).

To circumvent this problem, polymer dispersions in a continuous phase (e.g. water or mixtures of water with a water-miscible solvent) can be used instead of polymer solutions in organic solvents. The advantage of this is that the viscosity and the flow behaviour of the formulation are hardly dependent on the properties and the amount of the polymer in the disperse phase, but are instead substantially dependent on the properties of the continuous phase. This allows, firstly, the use of highly concentrated formulations which can be pumped to their site of use without any problems owing to their low viscosity even at very low temperatures. Secondly, when selecting the polymers, the solubility behaviour thereof in organic solvents need not be heeded; instead, when selecting the polymers, it is possible to focus more on the performance as flow improver.

The laid-open specifications WO9833846 A1, US20100025290 A1 and WO2019057396 A1 describe the preparation of such dispersions in the form of a secondary dispersion. This is a multistage process in which polymerization in organic solvent takes place first of all, followed by dispersion into a continuous phase. To generate the secondary dispersion with small particle sizes, what is necessary here is a high degree of shearing (e.g. via Ultraturrax, high-pressure homogenizer, ultrasound) in order to achieve a sufficient stability of the dispersions, this being complicated on an industrial scale. Where appropriate, it is moreover necessary at the end to distil off the organic solvent.

WO2019048663A1 and WO2017153462A1 describe the preparation of such dispersions via a so-called mini-emulsion polymerization. In this case, very small monomer droplets are formed before the actual polymerization with the

aid of high shear rates (e.g. ultrasound treatment or high-pressure homogenization) in an aqueous phase, which are then subsequently converted to polymer particles by polymerization. However, such a process can only be implemented with difficulty on an industrial scale and is moreover very costly.

A further possibility is the direct preparation of a polymer dispersion by emulsion polymerization. Whereas aqueous emulsion polymerization is widespread for a multiplicity of different monomers, this type of polymerization is a challenge for (meth)acrylates having long side chains (i.e. alkyl side chains ≥ C16) owing to the hydrophobicity of these monomers. Therefore, stable, low-coagulate dispersions cannot be prepared with these monomers via standard emulsion polymerization recipes, as are used for the synthesis of water-based coating resins for example. A successful emulsion polymerization of such monomers requires a particular reaction regime in combination with particular additives in order to allow transport of the hydrophobic monomers through the continuous phase during the polymerization and to obtain at the end a stable dispersion which has low amounts of coagulate and moreover remains stable over a broad temperature range.

DE3830913 describes the preparation of such polymer dispersions by emulsion polymerization. To obtain a low-coagulate and storage-stable dispersion, a high amount of ethylenically unsaturated mono- and/or dicarboxylic acid or anhydrides thereof must be used as comonomer. These large amounts of comonomer that must be used for stabilization lead to restrictions in the choice of copolymerization composition with regard to the effect as flow improver. For instance, an amount of 20% to 40% by weight of ethylenically unsaturated monocarboxylic acid or 5% to 20% by weight of dicarboxylic acids is required in order to obtain a stable, low-coagulate dispersion. Although the required amount can be additionally reduced by the incorporation of a third monomer component (of a (meth)acrylate having a short side group), this too leads to a great restriction with regard to the choice of copolymer composition.

The correct copolymer composition is, however, critical in many cases for the end use as flow improver in different (crude) oils. A good prediction of which polymer composition exhibits the optimal effect in which oil is not possible to date, since the exact mechanisms of action for pour point depression and paraffin inhibition, or improving the flow properties, have not been clarified. Therefore, the optimal polymer composition must generally be adapted empirically to the particular oil to be treated.

The preparation of stable polymer dispersions in which the polymers consist of a high proportion of (meth) acrylates having side chains ≥ C16 is not possible via the method described in the patent. Moreover, storage stability tests were only done at room temperature. Storability and/or pumpability at low temperatures were therefore not shown, though this is critical for the end use. CN-A-108047868 discloses dispersions of acrylic polymers that are produced by polymerizing 2 different sulfosuccinate surfactants.

US 7,790,821 B2 likewise describes the preparation of polymer dispersions made from acrylates having long side chains that are prepared via free-radical emulsion polymerization. In this case, the use of unsaturated mono- or dicarboxylic acids as stabilizing comonomers can be dispensed with, thereby achieving a higher flexibility with respect to the polymer composition. Besides the use of an emulsifier, the stabilization of the dispersion is achieved by a water-miscible cosolvent in the continuous phase of the dispersion.

However, it became apparent that a polymer dispersion prepared via this process and based on behenyl (meth) acrylate (C18 to C22 side chain) has a high amount of coagulate and is therefore difficult to filter. Moreover, the dispersions thus obtained were not found to be storage-stable, and they therefore cannot be used as paraffin inhibitors and/or pour point depressants in crude oils.

It is therefore an object of the invention to provide improved polymer dispersions for use as paraffin inhibitors and/or pour point depressant that have high contents of polymers having long side chains (i.e. alkyl side chains ≥ C16), that can be processed easily and that simultaneously have a high stability and flowability over a broad temperature range, and that especially remain applicable/pumpable even at low temperatures (< 0°C).

## Summary of the invention

Said object is achieved by a polymer dispersion containing

(a) 10 to 70 parts by weight of copolymers, the units of which are derived from

(a1) 50% to 99.9% by weight of one monomer or multiple monomers from the group of the alkyl (meth)acrylates having the general formula (1):

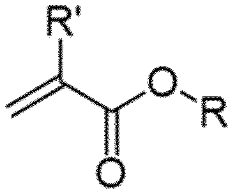

(1)

where $R = C_nH_{2n+1}$ with $n \geq 16$ and R' = $CH_3$ or H;

(a2) 0.1% to 10% by weight of ethylenically unsaturated monocarboxylic acids, dicarboxylic acids, or salts thereof or acid anhydrides thereof;

(a3) 0% to 49.9% by weight of one monomer or multiple monomers from the group of the alkyl (meth)acrylates of the general formula (2):

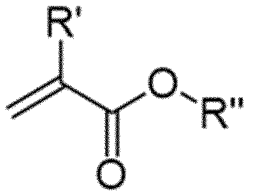

(2)

where R" = $C_nH_{2n+1}$ with n = 8 to 15 and R' = $CH_3$ or H;

(a4) 0% to 30% by weight of one monomer or multiple monomers selected from the group consisting of (meth) acrylamide, N-alkyl(meth)acrylamides or N,N-dialkyl(meth)acrylamides where alkyl = $C_nH_{2n+1}$ wherein n can be between 1 and 60, N-vinylpyrrolidone, 2-vinylpyridine, 4-vinylpyridine, styrene, vinyl acetate, isobornyl (meth) acrylate, tert-butyl (meth)acrylate, methyl (meth)acrylate, ethyl (meth)acrylate, n-butyl (meth)acrylate, i-butyl (meth)acrylate, hydroxyethyl (meth)acrylate, hydroxypropyl (meth)acrylate, hydroxybutyl (meth)acrylate, cyclohexyl (meth)acrylate, isohexyl (meth)acrylate, n-hexyl (meth)acrylate, benzyl (meth)acrylate, tetrahydrofurfuryl (meth)acrylate, 2-dimethylaminoethyl (meth)acrylate, 2-diethylaminopropyl methacrylate, 3-dimethylaminopropyl(meth)acrylamide, trimethylaminopropyl (meth)acrylate chloride, 3-trimethylammoniopropyl(meth)acrylamide chloride, hydroxyethylethylurea (meth)acrylate, N-methylol(meth)acrylamide, polyalkylene glycol ether (meth)acrylates of the general formula (3) (e.g. butyl diglycol (meth)acrylate, methoxy polyethylene glycol (meth) acrylate, stearyl polyethylene glycol (meth)acrylate), hydroxyethyl (meth)acrylate phosphate, an alkyl (meth) acrylate of the general formula (2) but with radical R" with n < 8;

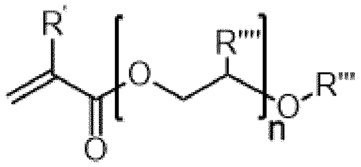

(3)

where n = 1 to 200; R' = $CH_3$ or H; R‴ = $C_mH_{2m+1}$ with m = 1 to 30; R⁗ = $CH_3$ or H;

(b) 0.5 to 20 parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;
(c) 1 to 40 parts by weight of a water-miscible cosolvent or a mixture of multiple water-miscible cosolvents;
(d) 0 to 20 parts by weight of one or more further emulsifiers, which do not belong to the group of the sulfosuccinates;
(e) 0 to 20 parts by weight of further components and
(f) water to 100 parts by weight.

The invention further relates to a process for preparing such a polymer dispersion by free-radical emulsion polymerization in water in the presence of at least one cosolvent and in the presence of an emulsifier system comprising at least two different emulsifiers from the group of the sulfosuccinates.

The invention further relates to the use of the polymer dispersion for inhibiting the deposition of paraffins in crude mineral oils and/or for lowering the pour point of crude mineral oils.

Detailed description of the invention

In the studies forming the basis of the invention, it was found that, surprisingly, use of an emulsifier system comprising at least two mutually different emulsifiers from the group of the sulfosuccinates in combination with small amounts (0.1 to 20, preferably 0.5 to 5, especially 1 to 3 parts by weight) of an unsaturated carboxylic acid as comonomer yields a polymer dispersion based on alkyl (meth)acrylates having long side chains (i.e. alkyl side chains ≥ C16) that has very low amounts of coagulate, can be easily filtered and moreover remains stable and flowable over a broad temperature range and especially has a good low-temperature applicability.

It was found that either a low amount of coagulate or a good flowability at low temperatures can be achieved when only one sulfosuccinate emulsifier is used. However, it is not possible to optimize the polymer dispersion with respect to both properties with the aid of only one sulfosuccinate emulsifier.

Sulfosuccinates (general formula 4) are surface-active metal salts of the mono- or diesters of sulfosuccinic acid. Mono- and diesters are equally suitable in principle for the polymer dispersion according to the invention. The metal salts are usually alkali metal or alkaline earth metal salts, especially sodium salts. Sulfosuccinates are used industrially as wetting agents and dispersants.

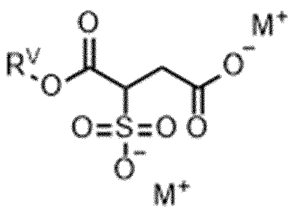

Sulfosuccinate Monoester

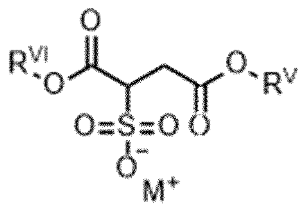

Sulfosuccinate Diester

(4)

where $M^+$ = metal salt (e.g. alkali metal ion or ½ alkaline earth metal ion), $R^V$ & $R^{VI}$ = mutually independently alkyl, aryl, aralkyl or alkylaryl radicals or $R^{VII}(O\text{-}CH2\text{-}CH2)_n$, wherein $R^{VII}$ = alkyl, aryl, aralkyl or alkylaryl radicals.

The invention relates to a polymer dispersion containing or consisting of

(a) 10 to 70, preferably 20 to 60, especially 30 to 40, parts by weight of copolymers, the units of which are derived from

(a1) 50% to 99.9% by weight, preferably 90% to 99.9% by weight, particularly preferably 95% to 99.9% by weight, of one monomer or multiple monomers from the group of the alkyl (meth)acrylates having the general formula (1):

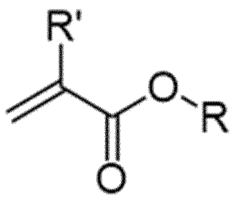

(1)

where $R = C_nH_{2n+1}$ with $n \geq 16$, preferably with $16 \leq n \leq 30$, particularly preferably with $16 \leq n \leq 24$, and $R' = CH_3$ or H;

(a2) 0.1% to 20% by weight, preferably 0.5% to 5% by weight, particularly preferably 1% to 3% by weight, of ethylenically unsaturated monocarboxylic acids, dicarboxylic acids, or salts thereof or acid anhydrides thereof;

(a3) 0% to 49.9% by weight, preferably 0% to 30% by weight, particularly preferably 0% to 10% by weight, of one monomer or multiple monomers from the group of the alkyl (meth)acrylates of the general formula (2):

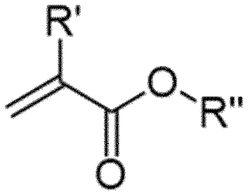

(2)

where R" = $C_nH_{2n+1}$ with n = 8 to 15 and R' = $CH_3$ or H;

(a4) 0% to 30% by weight, preferably 0% to 20% by weight, particularly preferably 0% to 10% by weight, of one monomer or multiple monomers selected from the group consisting of (meth)acrylamide, N-alkyl(meth)acrylamides or N,N-dialkyl(meth)acrylamides where alkyl = $C_nH_{2n+1}$ wherein n can be between 1 and 60, N-vinylpyrrolidone, 2-vinylpyridine, 4-vinylpyridine, styrene, vinyl acetate, isobornyl (meth)acrylate, tert-butyl (meth)acrylate, methyl (meth)acrylate, ethyl (meth)acrylate, n-butyl (meth)acrylate, i-butyl (meth)acrylate, hydroxyethyl (meth)acrylate, hydroxypropyl (meth)acrylate, hydroxybutyl (meth)acrylate, cyclohexyl (meth)acrylate, isohexyl (meth)acrylate, n-hexyl (meth)acrylate, benzyl (meth)acrylate, tetrahydrofurfuryl (meth)acrylate, 2-dimethylaminoethyl (meth)acrylate (e.g. VISIOMER® MADAME), 2-diethylaminopropyl (meth)acrylate, 3-dimethylaminopropyl(meth)acrylamide (e.g. VISIOMER® DMAPMA), trimethylaminopropyl (meth)acrylate chloride (e.g. VISIOMER® TMAEMC), 3-trimethylammoniopropyl(meth)acrylamide chloride (VISIOMER® MAPTAC), hydroxyethylethylurea (meth)acrylate (e.g. VISIOMER® MEEU), N-methylol(meth)acrylamide (e.g. VISIOMER® N-MMAA), polyalkylene glycol ether (meth)acrylates of the general formula 3 (e.g. Visiomer® C18 PEG 1105 MA W, VISIOMER® BDGMA, VISIOMER® MPEG 750 MA W, MPEG 1005 MA W or MPEG 5005 MA W), hydroxyethyl (meth)acrylate phosphate (HEMA phosphate), an alkyl (meth)acrylate of the general formula (2) but with radical R" with n < 8;

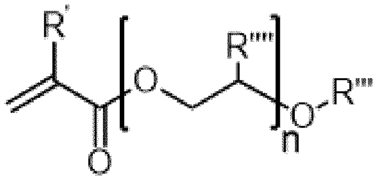

(3)

where n = 1 to 200; R' = $CH_3$ or H; R''' = $C_mH_{2m+1}$ with m = 1 to 30; R'''' = $CH_3$ or H;

(b) 0.5 to 20, preferably 0.5 to 5, especially 0.5 to 3, parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;

(c) 1 to 40, preferably 10 to 30, especially 14 to 20, parts by weight of a water-miscible cosolvent or a mixture of multiple water-miscible cosolvents;

(d) 0 to 20, preferably 0 to 10, especially 0 to 5, parts by weight of one or more further emulsifiers, which do not belong to the group of the sulfosuccinates;

(e) 0 to 20, preferably 0 to 10, especially 0 to 5, parts by weight of further components and

(f) water to 100 parts by weight.

A particular embodiment of the present invention relates to a polymer dispersion containing or consisting of

(a) 10 to 70, preferably 20 to 60, especially 30 to 40, parts by weight of copolymers, the units of which are derived from

(a1) 50% to 99.9% by weight, preferably 90% to 99.9% by weight, particularly preferably 95% to 99.9% by weight, of one monomer or multiple monomers from the group of the alkyl (meth)acrylates having the general formula (1):

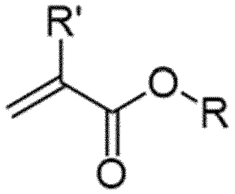

(1)

where $R = C_nH_{2n+1}$ with $n \geq 16$, preferably with $16 \leq n \leq 30$, particularly preferably with $16 \leq n \leq 24$, and $R' = CH_3$ or H;

(a2) 0.1% to 20% by weight, preferably 0.5% to 5% by weight, particularly preferably 1% to 3% by weight, of ethylenically unsaturated monocarboxylic acids, dicarboxylic acids, or salts thereof or acid anhydrides thereof;

(b) 0.5 to 20, preferably 0.5 to 5, especially 0.5 to 3, parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;
(c) 1 to 40, preferably 10 to 30, especially 14 to 20, parts by weight of a water-miscible cosolvent or a mixture of multiple water-miscible cosolvents;
(d) 0 to 20, preferably 0 to 10, especially 0 to 5, parts by weight of one or more further emulsifiers, which do not belong to the sulfosuccinates;
(e) 0 to 20, preferably 0 to 10, especially 0 to 5, parts by weight of further components and
(f) water to 100 parts by weight.

A further particular embodiment of the present invention relates to a polymer dispersion containing or consisting of

(a) 10 to 70, preferably 20 to 60, especially 30 to 40, parts by weight of copolymers, the units of which are derived from

(a1) 50% to 99.9% by weight, preferably 90% to 99.9% by weight, particularly preferably 95% to 99.9% by weight, of one monomer or multiple monomers from the group of the alkyl (meth)acrylates having the general formula (1):

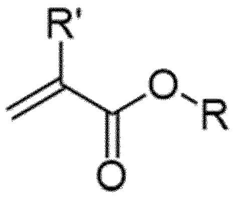

(1)

where $R = C_nH_{2n+1}$ with $n \geq 16$, preferably with $16 \leq n \leq 30$, particularly preferably with $16 \leq n \leq 24$, and $R' = CH_3$ or H;

(a2) 0.1% to 20% by weight, preferably 0.5% to 5% by weight, particularly preferably 1% to 3% by weight, of ethylenically unsaturated monocarboxylic acids, dicarboxylic acids, or salts thereof or acid anhydrides thereof;

(a3) 0% to 49.9% by weight, preferably 0% to 30% by weight, particularly preferably 0% to 10% by weight, of one monomer or multiple monomers from the group of the alkyl (meth)acrylates of the general formula (2):

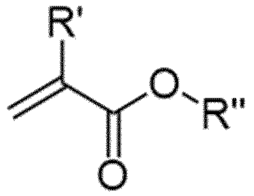

(2)

where R'' = $C_nH_{2n+1}$ with n = 8 to 15 and R' = $CH_3$ or H;

(a4) 0% to 30% by weight, preferably 0% to 20% by weight, particularly preferably 0% to 10% by weight, of one monomer or multiple monomers selected from the group consisting of (meth)acrylamide, N-alkyl(meth)acrylamides or N,N-dialkyl(meth)acrylamides where alkyl = $C_nH_{2n+1}$ wherein n can be between 1 and 60, N-vinylpyrrolidone, 2-vinylpyridine, 4-vinylpyridine, styrene, vinyl acetate, isobornyl (meth)acrylate, tert-butyl (meth)acrylate, methyl (meth)acrylate, ethyl (meth)acrylate, n-butyl (meth)acrylate, i-butyl (meth)acrylate, hydroxyethyl (meth)acrylate, hydroxypropyl (meth)acrylate, hydroxybutyl (meth)acrylate, cyclohexyl (meth)acrylate, isohexyl (meth)acrylate, n-hexyl (meth)acrylate, benzyl (meth)acrylate, tetrahydrofurfuryl (meth)acrylate, 2-dimethylaminoethyl (meth)acrylate (e.g. VISIOMER® MADAME), 2-diethylaminopropyl (meth)acrylate, 3-dimethylaminopropyl(meth)acrylamide (e.g. VISIOMER® DMAPMA), trimethylaminopropyl (meth)acrylate chloride (e.g. VISIOMER® TMAEMC), 3-trimethylammoniopropyl(meth)acrylamide chloride (VISIOMER® MAPTAC), hydroxyethylethylurea (meth)acrylate (e.g. VISIOMER® MEEU), N-methylol(meth)acrylamide (e.g. VISIOMER® N-MMAA), polyalkylene glycol ether (meth)acrylates of the general formula 3 (e.g. Visiomer® C18 PEG 1105 MA W, VISIOMER® BDGMA, VISIOMER® MPEG 750 MA W, MPEG 1005 MA W or MPEG 5005 MA W), hydroxyethyl (meth)acrylate phosphate (HEMA phosphate), an alkyl (meth)acrylate of the general formula (2) but with radical R'' with n < 8;

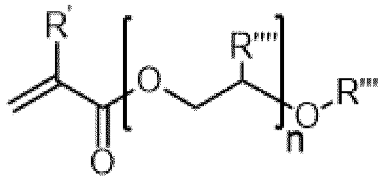

(3)

where n = 1 to 200; R' = $CH_3$ or H; R''' = $C_mH_{2m+1}$ with m = 1 to 30; R'''' = $CH_3$ or H;

(b) 0.5 to 20, preferably 0.5 to 5, especially 0.5 to 3, parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;
(c) 1 to 40, preferably 10 to 30, especially 14 to 20, parts by weight of a water-miscible cosolvent or a mixture of multiple water-miscible cosolvents; and
(d) water to 100 parts by weight.

A further particular embodiment of the present invention relates to a polymer dispersion containing or consisting of

(a) 10 to 70, preferably 20 to 60, especially 30 to 40, parts by weight of copolymers, the units of which are derived from

(a1) 50% to 99.9% by weight, preferably 90% to 99.9% by weight, particularly preferably 95% to 99.9% by weight, of one monomer or multiple monomers from the group of the alkyl (meth)acrylates having the general formula (1):

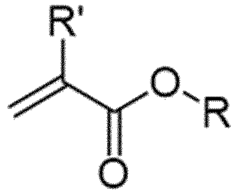

(1)

where R = $C_nH_{2n+1}$ with n ≥ 16, preferably with 16 ≤ n ≤ 30, particularly preferably with 16 ≤ n ≤ 24, and R' = $CH_3$ or H;

(a2) 0.1% to 20% by weight, preferably 0.5% to 5% by weight, particularly preferably 1% to 3% by weight, of ethylenically unsaturated monocarboxylic acids, dicarboxylic acids, or salts thereof or acid anhydrides thereof;

(b) 0.5 to 20, preferably 0.5 to 5, especially 0.5 to 3, parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;
(c) 1 to 40, preferably 10 to 30, especially 14 to 20, parts by weight of a water-miscible cosolvent or a mixture of multiple water-miscible cosolvents; and
(d) water to 100 parts by weight.

The expression (meth)acrylate as used in the context of this invention signifies the esters of (meth)acrylic acid and means here both methacrylate, such as, for example, methyl methacrylate, ethyl methacrylate, etc., and acrylate, such as, for example, methyl acrylate, ethyl acrylate, etc., and also mixtures of the two.

*Copolymers (a)*

The units of the copolymers present in the polymer dispersion are derived from the components (a1) to (a4).
The monomer from the group of the alkyl (meth)acrylates (a1) is preferably behenyl (meth)acrylate, a mixture of C18, C20 and C22 (meth)acrylate (e.g. BEMA 1822 F and BEA 1822 from BASF; VISIOMER® C18-22-MA).
The unsaturated monocarboxylic acids, dicarboxylic acids, or salts thereof or acid anhydrides thereof (a2) are preferably compounds having chain lengths < $C_{10}$. (Meth)acrylic acid and derivatives thereof are particularly preferred.

*Emulsifier system (b)*

In one embodiment of the invention, the emulsifier system (b) contains a sulfosuccinate having at least one $C_{10}$ to $C_{15}$ alkyl radical and also a further sulfosuccinate having a $C_{<10}$ alkyl radical. Preferably, the $C_{10}$ to $C_{15}$ alkyl radical is tridecyl and/or the $C_{<10}$ alkyl radical is 2-ethylhexyl.
The at least two different emulsifiers are preferably dialkyl sulfosuccinates in each case. The alkyl group can be linear or branched or contain an aliphatic ring. Examples of suitable alkyl radicals (hydrophobic groups) are isobutyl, isohexyl, cyclohexyl, 2-ethylhexyl, isooctyl, isodecyl, and isotridecyl. In the case of diesters, the alkyl groups are preferably identical.
The at least two different emulsifiers from the group of the sulfosuccinates are selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate, and also analogous salts with other counterions such as $Li^+$, $K^+$, $Mg^{2+}$, $Ca^{2+}$, $Sr^{2+}$, $Ba^{2+}$, etc. (commercial products: for example Aerosol® TR-70, TR-60, OT-75, GPG, OT-70, OT-100, MA-80, A196, AY-65, AY-100, IB-45, A-103 from Solvay; Triton™ GR-5M, GR-7M from Dow). In addition, sulfosuccinamates such as, for example, disodium N-octadecyl sulfosuccinamate (commercial products: for example Aerosol 18P from Solvay) can also be used.
In one embodiment of the invention, the emulsifier system contains the emulsifiers sodium bis(2-ethylhexyl) sulfosuccinate and sodium bistridecyl sulfosuccinate.
Sodium bis(2-ethylhexyl) sulfosuccinate and sodium bistridecyl sulfosuccinate are preferably used in the ratio of 1:10 to 10:1, particularly preferably in the ratio of 1:1.

Furthermore, the emulsifier system can contain a solvent or a solvent mixture, for example alcohol (e.g. ethanol), water or mixtures of alcohols and water (e.g. an ethanol/water mixture). Quantitative ratios are usually chosen such that a liquid emulsifier system is obtained. Typical quantitative ratios between emulsifier and solvent are 1:1 to 4:1.

*Water-miscible cosolvents (c)*

The water-miscible cosolvent(s) is/are preferably selected from the group consisting of short-chain alcohols, dialcohols, trialcohols, glycols and glycol ethers, ketones, and ethers. Examples of particularly suitable short-chain alcohols are butanol or isopropanol; examples of suitable dialcohols are 1,3-propanediol, 1,2-propanediol, neopentyl glycol; an example of a suitable trialcohol is glycerol; examples of suitable glycols are ethylene glycol or propylene glycol, diethylene glycol or dipropylene glycol, polyethylene glycol having an average molar mass up to approx. 600 g/mol; examples of suitable glycol ethers are methyl glycol, ethylene glycol monoethyl ether, ethylene glycol monopropyl ether, ethylene glycol monoisopropyl ether, ethylene glycol monobutyl ether, ethylene glycol monobenzyl ether, diethylene glycol monomethyl ether, diethylene glycol monoethyl ether, butyl diglycol, 1-methoxy-2-propanol, ethoxypropanol, propylene glycol monobutyl ether, dipropylene glycol methyl ether, polyalkylene glycol ether of the general formula $C_nH2_{n+1}(OCH_2\text{-}CH_2)_mOH$ with n = 0 to 5 and m = 0 to 20, ethylene glycol dimethyl ether; examples of suitable ketones are acetone or methyl ethyl ketone; an example of a suitable ether is 1,4-dioxane.

*Further emulsifiers (d)*

The further emulsifiers (d) are emulsifiers which do not belong to the group of the sulfosuccinates. Said emulsifiers can be ionic or non-ionic.

The further emulsifier(s) is/are preferably selected from the group of the water-in-oil emulsifiers (W/O emulsifiers) or mixtures of these emulsifiers preferably having a Griffin HLB value of less than 9 or mixtures yielding together an HLB value of less than 9.

The Griffin HLB value is calculated via the formula

$$HLB=20*(1-(M_l / M)),$$

where $M_l$ corresponds to the molar mass of the hydrophobic part of the molecule and M corresponds to the total molar mass of the molecule.

*Further components (e)*

The further components (e) can, for example, be buffers, residues of polymerization initiators or chain transfer agents, biocides or defoamers.

After synthesis, the polymer dispersions according to the invention have a low amount of coagulate (< 0.5%, preferably < 0.2%), are easily filterable and are simultaneously readily flowable over a broad temperature range (≥ +30°C to ≤ -20°C).

A sufficiently good flowability corresponds to a viscosity of < 1000 mPa*s (preferably < 500 mPa*s) at a shear rate of 100 $s^{-1}$.

*Preparation of the polymer dispersions according to the invention*

The invention further relates to a process for preparing a polymer dispersion as described above by free-radical emulsion polymerization in water in the presence of at least one cosolvent and in the presence of an emulsifier system comprising at least two different emulsifiers from the group of the sulfosuccinates.

Thus, in the process according to the invention, copolymers (10 to 70 parts by weight), the units of which are derived from

(a1) 50% to 99.9% by weight of one monomer or multiple monomers from the group of the alkyl (meth)acrylates having the general formula (1):

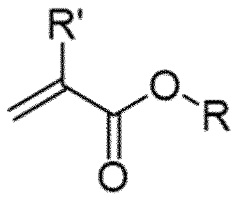

(1)

where R = $C_nH_{2n+1}$ with n ≥ 16 and R' = $CH_3$ or H;

(a2) 0.1% to 10% by weight of ethylenically unsaturated monocarboxylic acids, dicarboxylic acids, or salts thereof or acid anhydrides thereof;

(a3) 0% to 49.9% by weight of one monomer or multiple monomers from the group of the alkyl (meth)acrylates of the general formula (2):

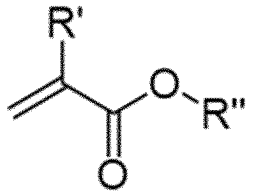

(2)

where R" = $C_nH_{2n+1}$ with n = 8 to 15 and R' = $CH_3$ or H;

(a4) 0% to 30% by weight of one monomer or multiple monomers selected from the group consisting of (meth) acrylamide, N-alkyl(meth)acrylamides or N,N-dialkyl(meth)acrylamides where alkyl = $C_nH_{2n+1}$ wherein n can be between 1 and 60, N-vinylpyrrolidone, 2-vinylpyridine, 4-vinylpyridine, styrene, vinyl acetate, isobornyl (meth) acrylate, tert-butyl (meth)acrylate, methyl (meth)acrylate, ethyl (meth)acrylate, n-butyl (meth)acrylate, i-butyl (meth)acrylate, hydroxyethyl (meth)acrylate, hydroxypropyl (meth)acrylate, hydroxybutyl (meth)acrylate, cyclohexyl (meth)acrylate, isohexyl (meth)acrylate, n-hexyl (meth)acrylate, benzyl (meth)acrylate, tetrahydrofurfuryl (meth) acrylate, 2-dimethylaminoethyl (meth)acrylate, 2-diethylaminopropyl methacrylate, 3-dimethylaminopropyl(meth) acrylamide, trimethylaminopropyl (meth)acrylate chloride, 3-trimethylammoniopropyl(meth)acrylamide chloride, hydroxyethylethylurea (meth)acrylate, N-methylol(meth)acrylamide, polyalkylene glycol ether (meth)acrylates of the general formula (3), hydroxyethyl (meth)acrylate phosphate, an alkyl (meth)acrylate of the general formula (2) but with radical R" with n < 8;

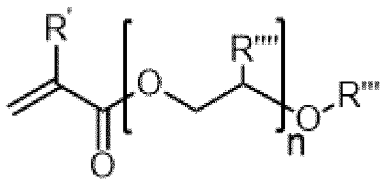

(3)

where n = 1 to 200; R' = $CH_3$ or H; R‴ = $C_mH_{2m+1}$ with m = 1 to 30; R⁗ = $CH_3$ or H;

are transferred into the polymer dispersion by free-radical emulsion polymerization in water in the presence of at least one water-miscible cosolvent (1 to 40 parts by weight) and in the presence of an emulsifier system (0.5 to 20 parts by weight) consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate.

Initiators selected from the group consisting of peroxides, organic hydroperoxides, peracids, peroxodisulfates and azo initiators are preferably used for said free-radical emulsion polymerization.

Initiators ("radical initiators") are known from the prior art. The radical initiators in the context of the invention that can be used are all commercially available initiators, for example azo compounds such as N,N-azobisisobutyronitrile

(AIBN) and peroxides or peroxide derivatives, it being possible to use them individually or in a mixture. Examples of suitable peroxides or peroxide derivatives are benzoyl peroxides, such as dibenzoyl peroxide (BPO), dicumyl peroxide, tert-butyl cumyl peroxide, lauroyl peroxide, tert-butyl perbenzoate, tert-butyl peroxy-2-ethylhexanate and/or tert-butylperoxy isopropyl carbonate, or peracids, organic hydroperoxides or peroxodisulfates. Preference is given to using radical initiators which are soluble in water or in a mixture of water and cosolvent, such as, for example, potassium peroxodisulfate, sodium peroxodisulfate, ammonium peroxodisulfate, 2,2'-azobis(2-methylpropionamidine) dihydrochloride, hydrogen peroxides or other hydroxy peroxides. Potassium peroxodisulfate (KPS) or ammonium peroxodisulfate (APS) is preferably used. Besides a thermal initiation of initiator decomposition, it is also possible to initiate initiator decomposition by a redox reaction (so-called redox polymerization) or by a UV initiator.

A chain transfer agent can be used for the free-radical emulsion polymerization. This is a chemical compound which leads to a reduction in the average molar mass of the polymers as a result of radical transfer reactions. The chain transfer agent used is preferably an alkyl mercaptan, for example dodecyl mercaptan, 2-mercaptoethanol or 2-ethylhexyl thioglycolate.

The polymerization can be carried out within a temperature range from 20°C to 100°C, preferably at about 80°C. The reaction time is 0.5 to 5 h.

For pH regulation, a buffer substance, such as, for example, sodium tetraborate, sodium carbonate or acetate buffer, or a base, for example sodium hydroxide solution or ammonia solution, can be added.

To obtain a dispersion according to one embodiment of the invention, an ionic or non-ionic emulsifier selected from the group of the water-in-oil emulsifiers (W/O emulsifiers) or mixtures of these emulsifiers preferably having a Griffin HLB value of less than 9 or mixtures yielding together an HLB value of less than 9 can be added after completion of the polymerization.

The preparation of the dispersions can be carried out batchwise in a so-called batch process, in a feed process (so-called semi-batch process or fed-batch process), or via a continuous process. Preferably, the preparation is carried out via a batch or semi-batch process.

*Use of the polymer dispersions according to the invention*

The polymer dispersion according to the invention can be used for inhibiting the deposition of paraffins in crude mineral oils and/or for lowering the pour point of crude mineral oils. To this end, a direct addition of the polymer dispersion can be made to the crude oil. Alternatively, a dilute composition of the dispersion can also be used. The above-described cosolvents or a mixture of cosolvent and water are especially suitable for further dilution of the dispersion.

The following examples elucidate the subject matter of the invention without restricting it.

Examples

1. Preparation of polyBEMA and polyBEA solution polymers (comparative examples):

The preparation of the solution polymers was carried out analogously to US 6,218,490 B1, example 4.

Solution polymer 1a:

A 500 ml four-neck flask fitted with a reflux condenser, propeller stirrer, stirrer motor (200 rpm), thermometer (PT100 digital thermometer) and nitrogen inlet tube for introducing nitrogen under the liquid surface was initially charged with 128.8 g of BEMA (VISIOMER® C18-22MA) and 90.6 g of solvent naphtha S, which were heated to 40°C with the aid of an oil bath and stirred for 30 min. The mixture was heated to a bottom temperature of 100°C, and 0.822 g of tert-butyl perbenzoate in 15.0 g of solvent naphtha S was subsequently metered in over 90 min (0.176 g/min). After a total reaction time of 6 h, the batch was diluted with 115.0 g of solvent naphtha S to a total solids content of 37%.

The reaction was carried out under a nitrogen atmosphere (nitrogen flow rate ~45 L/h), with the nitrogen being conducted below the liquid surface. The polymer solutions obtained have a solids content of approx. 37%.

Solution polymer 1b:

Procedure carried out analogously to 1a, but 128.8 g of BEMA (VISIOMER® C18-22MA) and 205.6 g of solvent naphtha S were initially charged. No dilution with solvent naphtha S was carried out therefor after the polymerization.

Solution polymers 1c & 1d:

The procedure was carried out analogously to comparative examples 1a and 1b, but with use of BEA (BASF

Behenyl Acrylate 1822 F) instead of BEMA.

**Table 1: Overview of the analysis data of the solution polymers (comparative examples**

| Ex. | Monomer | Brookfield viscosity at 23°C [mPa*s] | $M_w$ (g/mol) | $M_n$ (g/mol) |
|---|---|---|---|---|
| 1a | BEMA | 421 | 369 000 | 75 800 |
| 1b | BEMA | 73 | 95 400 | 41 200 |
| 1c | BEA | 28 | 40 600 | 13 800 |
| 1d | BEA | 10 | 19 900 | 8480 |

2. Preparation of polymer dispersions

Dispersions of differing composition were prepared. The amounts used of the varied substances and the analytical characteristic data of the dispersions are listed in Table 2 and Table 3.

Apparatus: 1 L double jacket reactor fitted with reflux condenser, propeller stirrer, stirrer motor (200 rpm), and circulating constant-temperature bath, Testo data logger with Pt100 digital thermometer for temperature measurement in the reactor and in the circulating constant-temperature bath. The reaction was carried out under a nitrogen atmosphere (nitrogen flow rate ~6 L/h), with the nitrogen being conducted below the liquid surface by means of a glass tube.

1. Behenyl methacrylate (BEMA) or behenyl acrylate (BEA) was melted beforehand in a drying cabinet at 60°C.
2. A mixture of water, 2.0 g of sodium tetraborate decahydrate, 80.0 g of dipropylene glycol methyl ether (Dowanol™ DPM from Dow) and emulsifier was added to the reactor adjusted in temperature to 50°C and was heated to 50°C under stirring (stirrer speed: 200 rpm). Immediately after filling, the introduction of nitrogen was started.
3. Methacrylic acid and 0.5 g of dodecyl mercaptan were dissolved in the melted behenyl methacrylate or acrylate and filled into the reactor. The mixture was adjusted in temperature to 80°C, and the initiator solution consisting of 1.0 g of potassium peroxodisulfate and 20.0 g of water was subsequently metered in within one minute. The mixture was stirred at 80°C for 2 h and then cooled to room temperature.
4. The dispersion was filtered through an E-D-Schnellsieb (nylon fabric, super-fine, 125 µm) and the amount of coagulate was weighed. The amount of coagulate is specified in the non-dried state in %, based on the polymer.

The polymer dispersions obtained all have a solids content of about 35%.

**Table 2: Composition and analysis results of the dispersions as per example 2 (comparative examples)**

| Ex. | Water | Emulsifier * | Monomers ** | Filterability of dispersion | Optical assessment of dispersion after filtration | Amount of coagulate | Brookfield viscosity at 23°C [mPa*s] | pH | $r_{DNC}$ [nm] | $M_w$ [g/mol] | $M_n$ [g/mol] | Note |
|---|---|---|---|---|---|---|---|---|---|---|---|---|
| 2a | 220.0 g | 10.00 g of Aerosol TR70 | 169.00 g of BEA | Poor | Completely coagulated within a few days | 10.1% | 33 | 2.93 | - | 220 000 | 46 800 | As per US 7,790,821 B2 |
| 2b | 220.0 g | 10.00 g of Aerosol TR70 | 167.40 g of BEA + 1.70 g of GMAA | Poor | Contains many specks | 3.0% | 72 | 5.55 | 303 | 151 000 | 48 100 | |
| 2c | 220.0 g | 10.00 g of Aerosol TR70 | 169.00 g of BEMA | Poor | Contains many specks | 4.8% | 20 | 8.68 | 104 | 105 000 | 48 000 | As per US 7,790,821 B2 |
| 2d | 220.0 g | 10.00 g of Aerosol TR70 | 167.40 g of BEMA + 1.70 g of GMAA | Poor | Contains many specks | 1.9% | 82 | 5.26 | 133 | 183 000 | 50 400 | |
| 2e | 220.0 g | 10.00 g of Aerosol TR70 | 165.70 g of BEMA + 3.30 g of GMAA | Good | Hardly contains specks | 0.4% | 24 | 5.19 | 123 | 153 000 | 52 100 | |
| 2f | 215.0 g | 15.00 g of Aerosol TR70 | 165.70 g of BEMA + 3.30 g of GMAA | Good | Hardly contains specks | 0.3% | 68 | 5.24 | 120 | 234 000 | 57 800 | |
| 2g | 210.0 g | 20.00 g of Aerosol TR70 | 165.70 g of BEMA + 3.30 g of GMAA | Moderate | Hardly contains specks | 0.5% | 529 | 5.25 | 112 | 165 000 | 53 700 | |
| 2h | 205.0 g | 25.00 g of Aerosol TR70 | 165.70 g of BEMA + 3.30 g of GMAA | Poor | Hardly contains specks | 0.9% | 720 | 5.35 | 112 | 112 000 | 47 000 | |

(continued)

| Ex. | Water | Emulsifier * | Monomers ** | Filterability of dispersion | Optical assessment of dispersion after filtration | Amount of coagulate | Brookfield viscosity at 23°C [mPa*s] | pH | $r_{DNC}$ [nm] | $M_w$ [g/mol] | $M_n$ [g/mol] | Note |
|---|---|---|---|---|---|---|---|---|---|---|---|---|
| 2i | 223.0 g | 7.00 g of sodium dicyclo hexyl sulfo succinate | 165.70 g of BEMA + 3.30 g of GMAA | Poor | Inhomogeneous dispersion, completely coagulated within one day | 7.5% | n.d. | 5.15 | 461 | n.d. | n.d. | |
| 2j | 223.68 g | 6.67 g of Aerosol OT75 | 165.70 g of BEMA + 3.30 g of GMAA | Good | Contains many specks | 0.7% | 12 | 5.25 | 234 | 97 600 | 50 600 | |
| 2k | 220.67 g | 9.33 g of Aerosol OT75 | 165.70 g of BEMA + 3.30 g of GMAA | Good | Contains many specks | 0.6% | 12 | 5.06 | 352 | 119 000 | 50 400 | |
| 2l | 216.0 g | 14.00 g of Aerosol OT75 | 165.70 g of BEMA + 3.30 g of GMAA | Moderate | Contains many specks | 1.3% | 13 | 5.01 | 244 | 121 000 | 52 300 | |
| 2m | 220.67 g | 9.33 g of Aerosol OT75 | 160.5 g of BEMA + 8.45 g of GMAA | Good | Contains many specks | 0.7% | 16 | 4.81 | 241 | 104 000 | 41 600 | |
| 2n | 219.2 g | 10.80 g of sodium bis(2-ethylhexyl) sulfo succinate 65% solution | 165.70 g of BEMA + 3.30 g of GMAA | Moderate | Contains many specks | 1.2% | 15 | 5.23 | 164 | 118 000 | 52 600 | |

(continued)

| Ex. | Water | Emulsifier * | Monomers ** | Filterability of dispersion | Optical assessment of dispersion after filtration | Amount of coagulate | Brookfield viscosity at 23°C [mPa*s] | pH | $r_{DNC}$ [nm] | $M_w$ [g/mol] | $M_n$ [g/mol] | Note |
|---|---|---|---|---|---|---|---|---|---|---|---|---|
| 2o | 213.8 g | 16.2 g sodium bis(2-ethylhexyl) sulfo succinate 65% solution | 165.70 g of BEMA + 3.30 g of GMAA | Moderate | Contains many specks | 1.5% | 16 | 5.22 | 157 | 120 000 | 53 000 | |

* Aerosol® TR70 = sodium bistridecyl sulfosuccinate, 70% in ethanol/water mixture; Aerosol® OT75 = sodium bis(2-ethylhexyl) sulfosuccinate, 75% in ethanol/water mixture; sodium bis(2-ethylhexyl) sulfosuccinate (from TCI) was used as a 65% solution in 1:1 water:ethanol; sodium dicyclohexyl sulfosuccinate was purchased from Sigma Aldrich.

** BEA (behenyl acrylate) = BASF BEA 1822 F; BEMA (behenyl methacrylate) = VISIOMER® C18-22MA; GMAA (methacrylic acid) = VISIOMER® GMAA.

**Table 3: Composition and analysis results of the dispersions as per example 3 (examples as per the invention)**

| Ex. | Water | Emulsifier* 1 | Emulsifier* 2 | Monomers** | Filterability of dispersion | Optical assessment of dispersion after filtration | Amount of coagulate | Brookfield viscosity at 23°C [mPa*s] | pH | $r_{DNC}$ [nm] | $M_w$ [g/mol] | $M_n$ [g/mol] |
|---|---|---|---|---|---|---|---|---|---|---|---|---|
| 3a | 216.19g | 7.14 g of Aerosol TR70 | 6.66 g of Aerosol OT75 | 165.70 g of BEMA + 3.30 g of GMAA | Good | Hardly contains specks | 0.25% | 19 | 5.11 | 201 | 132 000 | 51 800 |
| 3b | 210.67g | 10.00 g of Aerosol TR70 | 9.33 g of Aerosol OT75 | 165.70 g of BEMA + 3.30 g of GMAA | Good | Hardly contains specks | 0.15% | 15 | 5.21 | 225 | 117 000 | 49 000 |
| 3c | 205.15g | 12.86 g of Aerosol TR70 | 12.00 g of Aerosol OT75 | 165.70 g of BEMA + 3.30 g of GMAA | Good | Hardly contains specks | 0.26% | 19 | 4.95 | 320 | 153 000 | 55 500 |
| 3d | 210.67g | 10.00 g of Aerosol TR70 | 9.33 g of Aerosol OT75 | 160.55 g of BEMA + 8.45 g of GMAA | Good | Hardly contains specks | 0.15% | 16 | 4.73 | 153 | 145 000 | 39 500 |
| 3e | 214.60g | 10.00 g of Aerosol TR70 | 5.40 g of sodium bis(2-ethylhexyl) sulfosuccinate 65% solution | 165.70 g of BEMA + 3.30 g of GMAA | Good | Hardly contains specks | 0.3% | 20 | 5.17 | 178 | 161 000 | 59 400 |
| 3f | 209.2 g | 10.00 g of Aerosol TR70 | 10.80 g of sodium bis(2-ethylhexyl) sulfosuccinate 65% solution | 165.70 g of BEMA + 3.30 g of GMAA | Good | Hardly contains specks | 0.15 | 15 | 5.24 | 215 | 152 000 | 56 400 |

3. Low-temperature flowability of the dispersions:

To show the flow behaviour during later application at different temperatures, rheological measurements were carried out as a function of temperature. To simulate the shearing strain on the polymer dispersions or solutions during application into a well, for example when metering in via a supply line, the measurements were carried out at a constant shear rate of 100 $s^{-1}$. The measurements were started at +30°C and cooled to -30°C at a cooling rate of 1 K/min.

Figure 1 shows the flow behaviour of the polymer solutions in solvent naphtha S as solvent (examples 1a to 1d). What can be seen here from the sharp rise in viscosity is that the polyBEA solutions become solid at temperatures < 20°C owing to the side-chain crystallization of the polymers. In the case of the polyBEMA solutions, solidification does not take place until at < 5°C.

Figure 2 shows the flow behaviour of sodium bistridecyl sulfosuccinate-stabilized dispersions having different contents of GMAA as comonomer. The dispersion without and with a 1% GMMA content (examples 2c and 2d) show a sharp rise in viscosity at temperatures below 10°C. In the case of a GMAA content of 2%, this rise is somewhat flatter. Below about 0°C, the viscosities however also rise here to quite high values, and this has an adverse effect on applicability at low temperatures.

For comparison, the pure external phase (water/dipropylene glycol methyl ether mixture; 75:25 ratio) has a very flat rise in viscosity, which only increases suddenly at approx. -14°C.

An increase in the amount of sodium bistridecyl sulfosuccinate to over 3% (examples 2g and 2h) can achieve a distinctly flatter viscosity profile over a broad temperature range (see Figure 3), but these dispersions have a moderate to poor filterability and a coagulate content of 0.5% or higher.

The use of sodium dicyclohexyl sulfosuccinate (example 2i) did not lead to a stable dispersion, and so flow behaviour was not tested here.

By using sodium bis(2-ethylhexyl) sulfosuccinate as emulsifier, it is possible to achieve a flat viscosity profile over a broad temperature range (Figure 4). In this case, the viscosity increases only slowly with decreasing temperature. Only at very low temperatures does a steep rise in viscosity occur as a result of solidification of the continuous phase of the dispersion.

However, dispersions having a coagulate content of < 0.6% cannot be achieved here. Moreover, even after filtration, the dispersions still have many specks, i.e. fine coagulates, that are not retained by the filter. These too can deposit on pipelines in end uses and lead to problems there.

The use of a mixture of sodium bistridecyl sulfosuccinate and sodium bis(2-ethylhexyl) sulfosuccinate achieves similarly flat viscosity profiles (Figure 5) as in the case of use of sodium bis(2-ethylhexyl) sulfosuccinate alone, but the combination of two different emulsifiers can produce dispersions which additionally have a very low amount of coagulate (< 0.3%, in some cases even < 0.2%), can be easily filtered and have only a very low amount of specks after filtration. Only at temperatures of usually < -20°C does a steep rise in viscosity occur as a result of the solidification of the continuous phase of the dispersion.

4. Pour point measurements of the polymer solutions and dispersions

To ascertain below which temperature the polymer solutions or dispersions become solid without action of a shearing force (e.g. during storage at low temperatures), the pour point was ascertained in accordance with ASTM D5985.

As can be seen in Table 4, the solution polymers 1a to 1d have a pour point > 0°C. Dispersion 2d, too, shows a pour point of > 0°C. By contrast, the pour points of the dispersions 3b and 3f according to the invention are distinctly below 0°C.

In the case of use at even lower temperatures, an additional investigation was done to determine whether the pour point can be further reduced by subsequent addition of dipropylene glycol methyl ether (DPM). These results as well are compiled in Table 4. Whereas the dispersion 2d containing only tridecyl sulfosuccinate as emulsifier cannot be readily diluted because the dispersion becomes inhomogeneous, the dispersion according to the invention can be diluted with DPM up to a ratio of approx. 1:1 without the dispersion being destabilized. As a result, the pour point can be distinctly reduced to as far as < -45°C.

**Table 4: Overview of pour points of different polymer solutions and dispersions**

| Ex. | Added amount of DPM*** | Pour point [°C] | Note |
|---|---|---|---|
| 1a | / | 6 | |
| 1b | / | 6 | |
| 1c | / | 21 | |
| 1d | / | 21 | |

(continued)

| Ex. | Added amount of DPM*** | Pour point [°C] | Note |
|---|---|---|---|
| 2d | / | 3 | |
| 2d | 10% | -9 | Dispersion stable after addition of DPM |
| 2d | 20% | Not determined | Distinct increase in speck count due to addition of DPM |
| 2d | 50% | Not determined | Dispersion becomes inhomogeneous |
| 3b | / | -6 | |
| 3b | 10% | -18 | Dispersion stable after addition of DPM |
| 3b | 20% | -27 | Dispersion stable after addition of DPM |
| 3b | 50% | <-45**** | Dispersion stable after addition of DPM |
| 3f | / | -9 | |

***DPM: dipropylene glycol methyl ether
**** Lowest reachable temperature of the instrument is -45°C. Pour point not yet reached at this temperature.

5. Pour point depression of crude oils:

To test the effect of the different polymer solutions and dispersions as pour point depressant, the pour point of different crude oils with and without addition of the polymers was ascertained in accordance with ASTM D5985. Here, the amount of added polymer solution or dispersion was chosen such that the same amounts of polymer were added in each case (100 and 1000 ppm in each case, based on the crude oil). In the case of the test in Texas crude oil (from Texas Raw Crude), 5% of a paraffin wax were added in order to artificially increase the amount of wax in the crude oil. This system served as the reference for the comparison of the different polymer solutions and dispersions. Furthermore, tests in a Caspian crude oil were carried out.

As can be seen in Table 5 and Table 6, approximately the same pour point depressions are achieved both in Texas crude oil and in Caspian crude oil with the polymer dispersions as with the corresponding solution polymers. Thus, the alternative form of administration of the polymers does not have an adverse effect on the effect thereof as pour point depressant. In the case of low metering rates (100 ppm), the dispersions achieve even greater pour point depressions than with the corresponding solutions in organic solvent.

**Table 5: Pour point measurements in Texas crude oil (WAT = 22°C)*****

| Polymer added | Pour point [°C] | Pour point depression [°C] |
|---|---|---|
| No addition of polymer | 12 | / |
| 100 ppm 1a | -15 | 27 |
| 1000 ppm 1a | -36 | 48 |
| 100 ppm 1b | -15 | 27 |
| 1000 ppm 1b | -39 | 51 |
| 100 ppm 2d | -15 | 27 |
| 1000 ppm 2d | -39 | 51 |
| 100 ppm 2e | -18 | 30 |
| 1000 ppm 2e | -39 | 51 |
| 100 ppm 2k | -21 | 33 |
| 1000 ppm 2k | -39 | 51 |
| 100 ppm 2n | -24 | 36 |
| 1000 ppm 2n | -39 | 51 |
| 100 ppm 3b | -24 | 36 |
| 1000 ppm 3b | -39 | 51 |

(continued)

| Polymer added | Pour point [°C] | Pour point depression [°C] |
|---|---|---|
| 100 ppm 3f | -24 | 36 |
| 1000 ppm 3f | -39 | 51 |
| ***** Crude oil from Texas Raw Crude + 5% paraffin wax (melting point 53-57°C in accordance with ASTM D87; from Sigma Aldrich) | | |

**Table 6: Pour point measurements in a Caspian crude oil (WAT = 24°C, wax content ~2%)**

| Polymer added | Pour point [°C] | Pour point depression [°C] |
|---|---|---|
| No addition of polymer | 0 | / |
| 100 ppm 1b | -6 | 6 |
| 1000 ppm 1b | -12 | 12 |
| 100 ppm 2d | -3 | 3 |
| 1000 ppm 2d | -12 | 12 |
| 100 ppm 2e | -6 | 6 |
| 1000 ppm 2e | -9 | 9 |
| 100 ppm 3b | -6 | 6 |
| 1000 ppm 3b | -9 | 9 |
| 100 ppm 3f | -6 | 6 |
| 1000 ppm 3f | -12 | 12 |

6. Wax inhibition in crude oils:

To test the effect of the polymer dispersions and solutions as paraffin inhibitors, the so-called cold finger deposition test was carried out. Here, paraffin deposition from crude oil on a cold finger was tested, by comparing the amount of deposition with and without addition of polymer. The polymers were added in the form of solutions or dispersions. The specified amount is also based here on the pure polymer in order to ensure better comparability. From the weighed wax deposits, wax inhibition was calculated via the following formula:

$$\text{Wax inhibition (\%)} = (w_0 - w_x)/w_0 * 100$$

where $w_0$ corresponds to the wax deposit in g without addition of polymer and $w_x$ corresponds to the wax deposit in g with addition of polymer.

Table 7 shows the results of the cold finger deposition tests for selected polymer dispersions in comparison with a corresponding solution polymer at a bath temperature of 37°C and a finger temperature of 4°C in Texas crude oil.

What can be seen is that both the polymer solutions and the dispersions lead to a distinct reduction in wax deposition and that they therefore act as wax inhibitors. Here, in the case of the same metered addition of polymer, the dispersion 3b even achieved a higher wax inhibition than the polymer solution 1a and dispersion 2j.

**Table 7: Wax inhibition in Texas crude oil (WAT = 22°C)***** (bath temperature 37°C, finger temperature 4°C)**

| Polymer added | After 3 h | | After 22 h | |
|---|---|---|---|---|
| | Wax deposition after 3 h [g] | Wax inhibition after 3 h [%] | Wax deposition after 22 h [g] | Wax inhibition after 22 h [%] |
| No addition of polymer | 3.53 | / | 4.04 | / |
| 100 ppm 1a | 1.45 | 59 | 2.24 | 45 |
| 100 ppm 2j | 1.86 | 47 | 2.82 | 30 |
| 100 ppm 3b | 1.32 | 62 | 2.00 | 51 |

(continued)

| Polymer added | After 3 h | | After 22 h | |
|---|---|---|---|---|
| | **Wax deposition after 3 h [g]** | **Wax inhibition after 3 h [%]** | **Wax deposition after 22 h [g]** | **Wax inhibition after 22 h [%]** |
| No addition of polymer | 3.42 | / | 4.86 | / |
| 500 ppm 1a | 1.35 | 61 | 1.55 | 68 |
| 500 ppm 2j | 1.54 | 55 | 2.03 | 58 |
| 500 ppm 3b | 1.21 | 65 | 1.54 | 68 |
| ***** Crude oil from Texas Raw Crude + 5% paraffin wax (melting point 53-57°C in accordance with ASTM D87; from Sigma Aldrich) | | | | |

7. Stability tests of the dispersions

To investigate whether the dispersions have a sufficient storage stability under different ambient conditions, freezing stability, warm-storage stability and storage stability at room temperature were tested.

Testing of freezing stability:

Samples of 245 g each were weighed in 250 mL PE wide-neck bottles and cooled to -20°C in a freezer. After 16 h at this temperature, thawing was carried out at 23°C for 4 h in a constant-temperature bath and the pasty polymers were stirred using a propeller stirrer (500 rpm) for 30 min. Thereafter, an optical check for coagulate, specks and inhomogeneity was carried out, the polymers were filtered across a sieve fabric (Schnellsieb 125 μm) and the coagulate was weighed. After a further 2 hours of holding the temperature at 23°C, Brookfield viscosity and particle size were determined. This cycle of freezing and thawing was repeated 5 times.

The results are compiled in Table 8. What can be seen is that, in the case of the dispersion 2d, a distinct rise in Brookfield viscosity and in particle size already occurs after the first freeze-thaw cycle. Moreover, significant amounts of coagulate are formed in every cycle. In the case of the dispersions 3d and 3f according to the invention, no coagulate can be seen in the filter with the naked eye, and the weighed amounts of coagulate are very low. Viscosity and particle size, too, remain unchanged in said dispersions within the limit of measurement accuracy.

**Table 8: Summary of the results of the freezing stability tests**

| **Dispersion as per example:** | | **2d** | **3f** | **3d** |
|---|---|---|---|---|
| Start | Viscosity | 25 mPas | 16 mPas | 15 mPas |
| | Particle size | 125 nm | 211 nm | 221 nm |
| 1st cycle | Viscosity | 123 mPas | 16 mPas | 15 mPas |
| | Particle size | 239 nm | 218 nm | 226 nm |
| | Coagulate wet/dry | 1.1% / 0.5% | 0.3% / 0.1% | 0.3% / 0.2% |
| | Filterability (- = poor; + = good) | - | + | + |
| | Opt. assessment | Highly viscous, some coagulate | Unchanged | Unchanged |
| 2nd cycle | Viscosity | 126 mPas | 16 mPas | 15 mPas |
| | Particle size | 233 nm | 219 nm | 223 nm |
| | Coagulate wet/dry | 1.4% / 0.6% | 0.3% / 0.1% | 0.3% / 0.1% |
| | Filterability | - | + | + |
| | Opt. assessment | Highly viscous, some coagulate | Unchanged | Unchanged |

(continued)

| Dispersion as per example: | | 2d | 3f | 3d |
|---|---|---|---|---|
| 3rd cycle | Viscosity | 139 mPas | 16 mPas | 15 mPas |
| | Particle size | 244 nm | 210 nm | 219 nm |
| | Coagulate wet/dry | 1.4% / 1.0% | 0.3% / 0.2% | 0.4% / 0.2% |
| | Filterability | - | + | + |
| | Opt. assessment | Highly viscous, some coagulate | Unchanged | Unchanged |
| 4th cycle | Viscosity | 142 mPas | 16 mPas | 15 mPas |
| | Particle size | 236 nm | 215 nm | 226 nm |
| | Coagulate wet/dry | 1.1% / 0.5% | 0.4% / 0.2% | 0.3% / 0.1% |
| | Filterability | - | + | + |
| | Opt. assessment | Highly viscous, some coagulate | Unchanged | Unchanged |
| 5th cycle | Viscosity | 160 mPas | 16 mPas | 15 mPas |
| | Particle size | 266 nm | 219 nm | 224 nm |
| | Coagulate wet/dry | 1.2% / 0.5% | 0.4% / 0.2% | 0.4% / 0.2% |
| | Filterability | - | + | + |
| | Opt. assessment | Highly viscous, some coagulate | Unchanged | Unchanged |

Testing of warm-storage stability:

Warm-storage stability was tested for the dispersions 3d and 3f according to the invention. Samples of 30 g each were weighed in 50 mL PE wide-neck bottles (glass) and stored at 80°C in an air-circulation drying cabinet. A visual check for coagulate formation was made every two hours on the first two days and every 4 hours on the following days. After 7 days of storage, the polymers were filtered across a sieve fabric (Schnellsieb 125 μm), any coagulate present was weighed and particle size was determined. The polymers are considered to have warm-storage stability if no significant changes occurred after 7 days.

No optical changes could be observed here. Particle size, too, was unchanged and the amounts of coagulate formed were, at 0.3% (wet) in each case, relatively low.

Testing of room-temperature stability:

Samples of 245 g each were weighed in 250 mL PE wide-neck bottles and stored at 23°C in a climate-controlled room. After one week and after 1, 3, 6 and 8 months, the polymers were stirred using a propeller stirrer (500 rpm) for 30 min and optically checked for coagulate, specks and inhomogeneity. Thereafter, the dispersions were filtered across a sieve fabric (Schnellsieb 125 μm) and any coagulate present was weighed. After 2 hours of holding the temperature at 23°C in a water bath, Brookfield viscosity and particle size were determined.

Here too, no optical changes, changes in viscosity or in particle size or significant amounts of coagulate could be observed for dispersions 3f and 3d. The dispersions are thus storage-stable at room temperature for at least 8 months.

Summary of the results of the examples:

Although dispersions made from BEA or BEMA as monomer can be prepared in accordance with example 1 of patent US 7,790,821 B2 (examples 2a and 2c), they contain large amounts of coagulate and are very difficult to filter, this being unfavourable for commercial use. In example 2a, there was even the occurrence of a complete coagulation of the dispersion.

By copolymerization with small amounts of methacrylic acid and by varying the amount of sodium bistridecyl sulfosuccinate as emulsifier (examples 2d to h), it is possible to prepare dispersions which have low amounts of coagulate (< 0.5%), but they show an unfavourable flow behaviour at low temperatures, this ruling out use at low ambient temperatures.

By using sodium bis(2-ethylhexyl) sulfosuccinate, it is possible to obtain dispersions which show an improved flow behaviour at low temperatures and are also easily filterable, but it was not possible to obtain dispersions having less

than 0.5% coagulate. Moreover, even after filtration, the dispersions still contain relatively large amounts of specks, i.e. relatively fine inhomogeneities in the dispersion, that are not retained by the filter. These too indicate a non-ideal stability of the system and can lead to unwanted deposits, for example in the supply lines, in the end use. Even an increase in the proportion of methacrylic acid (example 2m) cannot achieve any further improvement here.

By a combination of two emulsifiers (sodium bistridecyl sulfosuccinate and sodium bis(2-ethylhexyl) sulfosuccinate), it is possible to obtain dispersions which have a similar low-temperature flowability as the dispersions containing only sodium bis(2-ethylhexyl) sulfosuccinate, but moreover contain a distinctly lower amount of coagulate than dispersions containing only one emulsifier. Moreover, the dispersions can be easily filtered and have only a low amount of specks after filtration.

At the same metered addition, the dispersions can achieve comparable pour point depressions of crude oils as comparable solution polymers, but with the advantage that the dispersions can additionally be metered in at distinctly lower temperatures owing to their flow behaviour.

**Analysis methods:**

Ascertainment of solids content:

5 g of sample were dried to constant weight in an aluminium dish in a vacuum drying cabinet at 80°C for approx. 3 days.

Brookfield viscometry:

The polymers were adjusted in temperature to 23°C in a constant-temperature water bath, and dynamic viscosity was measured using a Brookfield rotary viscometer LVT DV II with guard leg at a rotational speed of 60 rpm with spindle I.

pH:

pH was measured using the pH meter Calimatic 761 from Knick, comprising a pH/Pt-100 glass combination electrode with ceramic diaphragm and 3 M KCl filling.

Determination of particle size:

Particle size was measured using the Delsa Nanosizer from Beckmann Coulter (rDNC). The sample was diluted with distilled water before measurement.

Molar mass distribution by means of GPC:

The polymers (approx. 5 g) were dried in aluminium dishes in a vacuum drying cabinet at 80°C for 3 days. Molar mass distribution was ascertained on the dried polymers by means of GPC (polymer standard for calibration: PMMA). The weight-average and the number-average molar mass ($M_w$ and $M_n$) of the polymers were determined therefrom.

Measurement of pour point:

The pour points of the polymer solutions and polymer dispersions and of the crude oils doped with the polymers were measured in accordance with ASTM D5985 using a pour point tester PPT 45150 from PSL Systemtechnik. The measurement yields the "no flow point" with a measurement accuracy of 0.1°C. The "no flow point" was determined as the mean of a triplicate determination. From the "no flow point", the pour point was then calculated in accordance with ASTM D97.

Cold finger deposition test (reduction in wax deposition from crude oils on cold surfaces by addition of polymer):

The cold finger deposition test was carried out using a cold finger deposition tester from PSL Systemtechnik (model CF15120).

Here, 80 mL of the mixture of crude oil + polymer solution or dispersion are heated to the desired bath temperature (e.g. 37°C) and stirred continuously at the same time. The cold finger is immersed into the sample, with the result that the wax present deposits on the finger surface little by little. After certain time intervals (e.g. after 3 and 22 h), this amount of wax is determined by weighing. The cold finger is kept at a desired finger temperature (e.g. 4°C) here. The chosen bath and finger temperature simulates here the passage of a warm oil through a pipeline having a cold surface (e.g. in winter or in the

deep sea).

Rheological tests:

The change in viscosity as a function of temperature was measured using an Anton Paar rheometer MCR302 with cone-plate geometry CP50-1 (diameter 50 mm, cone angle 1°) with TrueGap. Measurement was carried out at a constant shear rate of 100 $s^{-1}$ and a cooling rate of 1 K/min over a temperature range of +30 to -30°C measurement range.

Determination of WAT (wax appearance temperature) and of wax content:

Wax content and WAT were determined by means of DSC. Measurement was carried out here with a cooling rate of 2 K/min.

## Claims

**1.** Polymer dispersion containing

(a) 10 to 70 parts by weight of copolymers, the units of which are derived from

(a1) 50% to 99.9% by weight of one monomer or multiple monomers from the group of the alkyl (meth) acrylates having the general formula (1):

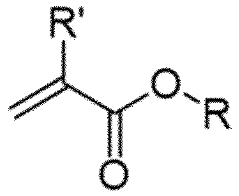

(1)

where R = $C_nH_{2n+1}$ with n ≥ 16 and R' = $CH_3$ or H;
(a2) 0.1% to 10% by weight of ethylenically unsaturated monocarboxylic acids, dicarboxylic acids, or salts thereof or acid anhydrides thereof;
(a3) 0% to 49.9% by weight of one monomer or multiple monomers from the group of the alkyl (meth)acrylates of the general formula (2):

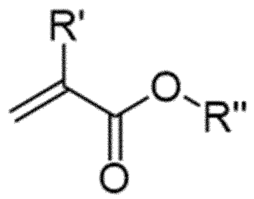

(2)

where R'' = $C_nH_{2n+1}$ with n = 8 to 15 and R' = $CH_3$ or H;
(a4) 0% to 30% by weight of one monomer or multiple monomers selected from the group consisting of (meth) acrylamide, N-alkyl(meth)acrylamides or N,N-dialkyl(meth)acrylamides where alkyl = $C_nH_{2n+1}$ wherein n can be between 1 and 60, N-vinylpyrrolidone, 2-vinylpyridine, 4-vinylpyridine, styrene, vinyl acetate, isobornyl (meth)acrylate, tert-butyl (meth)acrylate, methyl (meth)acrylate, ethyl (meth)acrylate, n-butyl (meth)acrylate, i-butyl (meth)acrylate, hydroxyethyl (meth)acrylate, hydroxypropyl (meth)acrylate, hydroxybutyl (meth)acrylate, cyclohexyl (meth)acrylate, isohexyl (meth)acrylate, n-hexyl (meth)acrylate, benzyl (meth)acrylate, tetrahydrofurfuryl (meth)acrylate, 2-dimethylaminoethyl (meth)acrylate, 2-diethylaminopropyl methacrylate, 3-dimethylaminopropyl(meth)acrylamide, trimethylaminopropyl (meth)acrylate chloride, 3-trimethylammoniopropyl(meth)acrylamide chloride, hydroxyethylethylurea (meth)acrylate, N-methylol(meth)acrylamide, polyalkylene glycol ether (meth)acrylates of the general formula (3), hydroxyethyl (meth)acrylate phosphate, an alkyl (meth)acrylate of the general formula (2) but with radical R'' with n < 8;

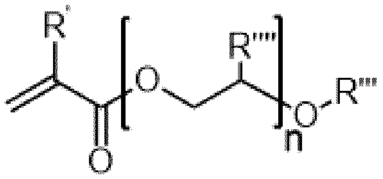

(3)

where n = 1 to 200; R' = $CH_3$ or H; R''' = $C_mH_{2m+1}$ with m = 1 to 30; R'''' = $CH_3$ or H;

(b) 0.5 to 20 parts by weight of an emulsifier system consisting of at least two different emulsifiers from the group of the sulfosuccinates independently selected from the group consisting of sodium bis(2-ethylhexyl) sulfosuccinate, sodium bistridecyl sulfosuccinate, sodium bisisooctyl sulfosuccinate, sodium biscyclohexyl sulfosuccinate, sodium bisoctyl sulfosuccinate, sodium diamyl sulfosuccinate, sodium diisobutyl sulfosuccinate, sodium dihexyl sulfosuccinate, disodium lauryl sulfosuccinate, disodium salt of ethoxylated nonylphenol sulfosuccinate, disodium ethylhexyl sulfosuccinate, and disodium N-octadecyl sulfosuccinate;
(c) 1 to 40 parts by weight of a water-miscible cosolvent or a mixture of multiple water-miscible cosolvents;
(d) 0 to 20 parts by weight of one or more further emulsifiers which do not belong to the group of the sulfosuccinates;
(e) 0 to 20 parts by weight of further components and
(f) water to 100 parts by weight.

**2.** Polymer dispersion according to Claim 1, wherein the emulsifier system contains a sulfosuccinate having at least one $C_{10}$ to $C_{15}$ alkyl radical and also a further sulfosuccinate having at least one $C_{<10}$ alkyl radical.

**3.** Polymer dispersion according to Claim 1 or 2, wherein the at least two different emulsifiers are dialkyl sulfosuccinates in each case.

**4.** Polymer dispersion according to any one of the preceding claims, wherein the emulsifier system contains sodium bis(2-ethylhexyl) sulfosuccinate and sodium bistridecyl sulfosuccinate.

**5.** Polymer dispersion according to Claim 4, wherein sodium bis(2-ethylhexyl) sulfosuccinate and sodium bistridecyl sulfosuccinate are used in the ratio of 1:10 to 10:1.

**6.** Polymer dispersion according to any one of the preceding claims, wherein the monomer from the group of the alkyl (meth)acrylates is behenyl (meth)acrylate and/or wherein the unsaturated monocarboxylic acids, dicarboxylic acids, or salts thereof or acid anhydrides thereof are (meth)acrylic acid and derivatives thereof.

**7.** Polymer dispersion according to any one of the preceding claims, wherein the water-miscible cosolvent(s) is/are selected from the group consisting of short-chain alcohols, dialcohols, trialcohols, glycols and glycol ethers, ketones, and ethers.

**8.** Polymer dispersion according to any one of the preceding claims, wherein the further emulsifier(s) (d) is/are selected from the group of the water-in-oil emulsifiers (W/O emulsifiers) or mixtures of these emulsifiers preferably having a Griffin HLB value of less than 9 or mixtures yielding together an HLB value of less than 9.

**9.** Process for preparing a polymer dispersion according to any one of Claims 1 to 8 by free-radical emulsion polymerization in water in the presence of at least one cosolvent and in the presence of an emulsifier system comprising at least two different emulsifiers from the group of the sulfosuccinates.

**10.** Process according to Claim 9, wherein initiators selected from the group consisting of peroxides, organic hydroperoxides, peracids and peroxodisulfates are used for the free-radical emulsion polymerization.

**11.** Process according to Claim 9 or 10, wherein at least one chain transfer agent selected from the group of the alkyl mercaptans is used for the free-radical emulsion polymerization.

**12.** Process according to any one of Claims 9 to 11, wherein the polymerization reaction is carried out at a temperature of 20°C to 100°C and/or wherein a buffer substance is added.

13. Process according to any one of Claims 9 to 12, wherein an emulsifier selected from the group of the water-in-oil emulsifiers (W/O emulsifiers) or mixtures of these emulsifiers preferably having a Griffin HLB value of less than 9 or mixtures yielding together an HLB value of less than 9 is added after completion of the polymerization.

14. Use of polymer dispersions according to any one of Claims 1 to 8 for inhibiting the deposition of paraffins in crude mineral oils and/or for reducing the pour point of crude mineral oils.

**Patentansprüche**

1. Polymerdispersion enthaltend

(a) 10 bis 70 Gewichtsteile Copolymere, deren Einheiten sich ableiten von

(a1) 50 bis 99,9 Gew.-% eines Monomers oder mehrerer Monomere aus der Gruppe der Alkyl(meth)acrylate mit der allgemeinen Formel (1):

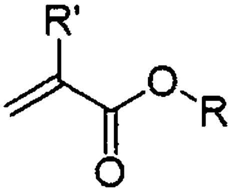

(1)

wobei R = $C_nH_{2n+1}$ mit n ≥ 16 und R' = $CH_3$ oder H;
(a2) 0,1 bis 10 Gew.-% ethylenisch ungesättigten Monocarbonsäuren, Dicarbonsäuren oder deren Salzen oder deren Säureanhydriden;
(a3) 0 bis 49,9 Gew.-% eines Monomers oder mehrerer Monomere aus der Gruppe der Alkyl(meth)acrylate der allgemeinen Formel (2):

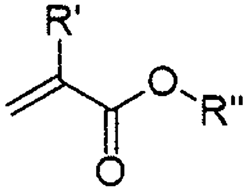

(2)

wobei R" = $C_nH_{2n+1}$ mit n = 8 bis 15 und R' = $CH_3$ oder H;
(a4) 0 bis 30 Gew.-% eines Monomers oder mehrerer Monomere ausgewählt aus der Gruppe bestehend aus (Meth)acrylamid, N-Alkyl(meth)acrylamiden oder N,N-Dialkyl (meth) acrylamiden, mit Alkyl = $C_nH_{2n+1}$, wobei n zwischen 1 und 60 liegen kann, N-Vinylpyrrolidon, 2-Vinylpyridin, 4-Vinylpyridin, Styrol, Vinylacetat, Isobornyl(meth)acrylat, tert-Butyl(meth)acrylat, Methyl(meth)acrylat, Ethyl(meth)acrylat, n-Butyl(meth)acrylat, i-Butyl(meth)acrylat, Hydroxyethyl(meth)acrylat, Hydroxypropyl(meth)acrylat, Hydroxybutyl(meth)acrylat, Cyclohexyl(meth)acrylat, Isohexyl(meth)acrylat, n-Hexyl(meth)acrylat, Benzyl(meth)acrylat, Tetrahydrofurfuryl(meth)acrylat, 2-Dimethylaminoethyl(meth)acrylat, 2-Diethylaminopropylmethacrylat, 3-Dimethylaminopropyl(meth)acrylamid, Trimethylaminopropyl(meth)acrylatchlorid, 3-Trimethylammoniopropyl(meth)acrylamidchlorid, Hydroxyethylethylharnstoff(meth)acrylat, N-Methylol(meth)acrylamid, Polyalkylenglycolether(meth)acrylaten der allgemeinen Formel (3), Hydroxyethyl(meth)acrylatphosphat, einem Alkyl (meth) acrylat der allgemeinen Formel (2), jedoch mit Rest R" mit n < 8;

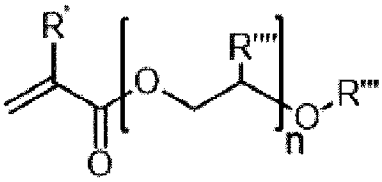

(3)

wobei n = 1 bis 200; R' = $CH_3$ oder H; R''' = $C_mH_{2m+1}$ mit m = 1 bis 30; R'''' = $CH_3$ oder H;

(b) 0,5 bis 20 Gewichtsteile eines Emulgatorsystems, das aus mindestens zwei verschiedenen Emulgatoren aus der Gruppe der Sulfosuccinate, die unabhängig aus der Gruppe bestehend aus Natriumbis(2-ethylhexyl) sulfosuccinat, Natriumbistridecylsulfosuccinat, Natriumbisisooctylsulfosuccinat, Natriumbiscyclohexylsulfosuccinat, Natriumbisoctylsulfosuccinat, Natriumdiamylsulfosuccinat, Natriumdiisobutylsulfosuccinat, Natriumdihexylsulfosuccinat, Dinatriumlaurylsulfosuccinat, Dinatriumsalz von ethoxyliertem Nonylphenolsulfosuccinat, Dinatriumethylhexylsulfosuccinat und Dinatrium-N-octadecylsulfosuccinat ausgewählt sind, besteht;
(c) 1 bis 40 Gewichtsteile eines mit Wasser mischbaren Cosolvens oder einer Mischung aus mehreren mit Wasser mischbaren Cosolventien;
(d) 0 bis 20 Gewichtsteile eines oder mehrerer weiterer Emulgatoren, die nicht zur Gruppe der Sulfosuccinate gehören;
(e) 0 bis 20 Gewichtsteile weitere Komponenten und
(f) Wasser ad 100 Gewichtsteile.

**2.** Polymerdispersion nach Anspruch 1, wobei das Emulgatorsystem ein Sulfosuccinat mit mindestens einem $C_{10}$- bis $C_{15}$-Alkylrest sowie ein weiteres Sulfosuccinat mit mindestens einem $C_{<10}$-Alkylrest enthält.

**3.** Polymerdispersion nach Anspruch 1 oder 2, wobei es sich bei dem mindestens zwei verschiedenen Emulgatoren jeweils um Dialkylsulfosuccinate handelt.

**4.** Polymerdispersion nach einem der vorhergehenden Ansprüche, wobei das Emulgatorsystem Natriumbis(2-ethylhexyl)sulfosuccinat und Natriumbistridecylsulfosuccinat enthält.

**5.** Polymerdispersion nach Anspruch 4, wobei Natriumbis(2-ethylhexyl)sulfosuccinat und Natriumbistridecylsulfosuccinat im Verhältnis 1:10 bis 10:1 eingesetzt werden.

**6.** Polymerdispersion nach einem der vorhergehenden Ansprüche, wobei es sich bei dem Monomer aus der Gruppe der Alkyl (meth)acrylate um Behenyl(meth)acrylat handelt und/oder wobei es sich bei den ungesättigten Monocarbonsäuren, Dicarbonsäuren oder deren Salzen oder deren Säureanhydriden um (Meth)acrylsäure und deren Derivate handelt.

**7.** Polymerdispersion nach einem der vorhergehenden Ansprüche, wobei das mit Wasser mischbare Cosolvens bzw. die mit Wasser mischbaren Cosolventien aus der Gruppe bestehend aus kurzkettigen Alkoholen, Dialkoholen, Trialkoholen, Glykolen und Glykolethern, Ketonen und Ethern ausgewählt ist bzw. sind.

**8.** Polymerdispersion nach einem der vorhergehenden Ansprüche, wobei der weitere Emulgator bzw. die weiteren Emulgatoren (d) aus der Gruppe der Wasser-in-Öl-Emulgatoren (W/O-Emulgatoren) oder Mischungen dieser Emulgatoren, vorzugsweise mit einem HLB-Wert nach Griffin kleiner 9, oder Mischungen, die zusammen einen HLB-Wert kleiner 9 ergeben, ausgewählt sind.

**9.** Verfahren zur Herstellung einer Polymerdispersion nach einem der Ansprüche 1 bis 8 durch radikalische Emulsionspolymerisation in Wasser in Gegenwart mindestens eines Cosolvens und in Gegenwart eines Emulgatorsystems, das mindestens zwei verschiedene Emulgatoren aus der Gruppe der Sulfosuccinate umfasst.

**10.** Verfahren nach Anspruch 9, wobei für die radikalische Emulsionspolymerisation Initiatoren verwendet werden, die aus der Gruppe bestehend aus Peroxiden, organischen Hydroperoxiden, Persäuren und Peroxodisulfaten ausgewählt werden.

**11.** Verfahren nach Anspruch 9 oder 10, wobei für die radikalische Emulsionspolymerisation mindestens ein Kettenübertragungsmittel verwendet wird, das aus der Gruppe der Alkylmercaptane ausgewählt wird.

**12.** Verfahren nach einem der Ansprüche 9 bis 11, wobei die Polymerisationsreaktion bei einer Temperatur von 20 °C bis 100 °C durchgeführt wird und/oder wobei eine Puffersubstanz zugegeben wird.

**13.** Verfahren nach einem der Ansprüche 9 bis 12, wobei nach Abschluss der Polymerisation ein Emulgator zugegeben wird, der aus der Gruppe der Wasser-in-Öl-Emulgatoren (W/O-Emulgatoren) oder Mischungen dieser Emulgatoren, vorzugsweise mit einem HLB-Wert nach Griffin kleiner 9, oder Mischungen, die zusammen einen HLB-Wert kleiner 9

ergeben, ausgewählt wird.

**14.** Verwendung von Polymerdispersionen nach einem der Ansprüche 1 bis 8 zur Inhibierung der Abscheidung von Paraffinen in rohen Erdölen und/oder zur Verringerung des Stockpunkts von rohen Erdölen.

## Revendications

**1.** Dispersion de polymères contenant

(a) 10 à 70 parties en poids de copolymères, dont les unités sont dérivées de

(a1) 50 % à 99,9 % en poids d'un monomère ou de multiples monomères issus du groupe des (méth)acrylates d'alkyle répondant à la formule générale (1) :

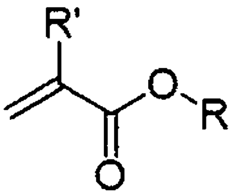

(1)

où R = $C_nH_{2n+1}$ avec n ≥ 16 et R' = $CH_3$ ou H ;

(a2) 0,1 % à 10 % en poids d'acides monocarboxyliques ou acides dicarboxyliques à insaturation éthylénique ou de sels de ceux-ci ou d'anhydrides de ceux-ci ;

(a3) 0 % à 49,9 % en poids d'un monomère ou de multiples monomères issus du groupe des (méth)acrylates d'alkyle répondant à la formule générale (2) :

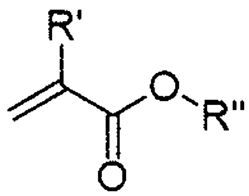

(2)

où R" = $C_nH_{2n+1}$ avec n = 8 à 15 et R' = $CH_3$ ou H ;

(a4) 0 % à 30 % en poids d'un monomère ou de multiples monomères choisis dans le groupe constitué par le (méth)acrylamide, les N-alkyl(méth)acrylamides ou les N,N-dialkyl(méth)acrylamides où alkyl = $C_nH_{2n+1}$, n pouvant être compris entre 1 et 60, la N-vinylpyrrolidone, la 2-vinylpyridine, la 4-vinylpyridine, le styrène, l'acétate de vinyle, le (méth)acrylate d'isobornyle, le (méth)acrylate de tert-butyle, le (méth)acrylate de méthyle, le (méth)acrylate d'éthyle, le (méth)acrylate de n-butyle, le (méth)acrylate d'isobutyle, le (méth)acrylate d'hydroxyéthyle, le (méth)acrylate d'hydroxypropyle, le (méth)acrylate d'hydroxybutyle, le (méth)acrylate de cyclohexyle, le (méth)acrylate d'isohexyle, le (méth)acrylate de n-hexyle, le (méth)acrylate de benzyle, le (méth)acrylate de tétrahydrofurfuryle, le (méth)acrylate de 2-diméthylaminoéthyle, le méthacrylate de 2-diéthylaminopropyle, le 3-diméthylaminopropyl(méth)acrylamide, le chlorure de (méth)acrylate de triméthylaminopropyle, le chlorure de 3-triméthylammoniopropyl(méth)acrylamide, le (méth)acrylate d'hydroxyéthylurée, le N-méthylol (méth)acrylamide, les (méth)acrylates d'éthers de polyalkylèneglycols de formule générale (3), le phosphate de (méth)acrylate d'hydroxyéthyle, un (méth)acrylate d'alkyle de formule générale (2) mais dans le radical R" duquel n est < 8 ;

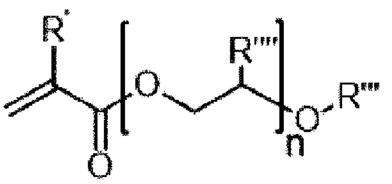

(3)

où n = 1 à 200 ; R' = $CH_3$ ou H ; R''' = $C_mH_{2m+1}$ avec m = 1 à 30 ; R'''' = $CH_3$ ou H ;

(b) 0,5 à 20 parties en poids d'un système émulsifiant constitué d'au moins deux émulsifiants différents issus du groupe des sulfosuccinates indépendamment choisis dans le groupe constitué par le bis(2-éthylhexyl)sulfosuccinate de sodium, le bistridécylsulfosuccinate de sodium, le bisisooctylsulfosuccinate de sodium, le biscyclohexylsulfosuccinate de sodium, le bisoctylsulfosuccinate de sodium, le diamylsulfosuccinate de sodium, le diisobutylsulfosuccinate de sodium, le dihexylsulfosuccinate de sodium, le laurylsulfosuccinate de disodium, le sel disodique de sulfosuccinate de nonylphénol éthoxylé, l'éthylhexylsulfosuccinate de disodium et le N-octadécylsulfosuccinate de disodium ;

(c) 1 à 40 parties en poids d'un cosolvant miscible avec l'eau ou d'un mélange de multiples cosolvants miscibles avec l'eau ;

(d) 0 à 20 parties en poids d'un ou plusieurs autres émulsifiants qui n'appartiennent pas au groupe des sulfosuccinates ;

(e) 0 à 20 parties en poids d'autres composants et

(f) de l'eau pour compléter à 100 parties en poids.

2. Dispersion de polymères selon la revendication 1, dans laquelle le système émulsifiant contient un sulfosuccinate ayant au moins un radical alkyle en $C_{10}$ à $C_{15}$ ainsi qu'un autre sulfosuccinate ayant au moins un radical alkyle en $C_{<10}$.

3. Dispersion de polymères selon la revendication 1 ou 2, dans laquelle les au moins deux émulsifiants différents sont des dialkylsulfosuccinates dans chaque cas.

4. Dispersion de polymères selon l'une quelconque des revendications précédentes, dans laquelle le système émulsifiant contient du bis(2-éthylhexyl)sulfosuccinate de sodium et du bistridécylsulfosuccinate de sodium.

5. Dispersion de polymères selon la revendication 4, dans laquelle le bis(2-éthylhexyl)sulfosuccinate de sodium et le bistridécylsulfosuccinate de sodium sont utilisés en un rapport de 1:10 à 10:1.

6. Dispersion de polymères selon l'une quelconque des revendications précédentes, dans laquelle le monomère issu du groupe des (méth)acrylates d'alkyle est le (méth)acrylate de béhényle et/ou dans laquelle les acides monocarboxyliques ou acides dicarboxyliques insaturés ou les sels de ceux-ci ou les anhydrides de ceux-ci sont l'acide (méth) acrylique et les dérivés de celui-ci.

7. Dispersion de polymères selon l'une quelconque des revendications précédentes, dans laquelle le ou les cosolvants miscibles avec l'eau sont choisis dans le groupe constitué par les alcools à chaîne courte, les diols, les triols, les glycols et éthers de glycols, les cétones et les éthers.

8. Dispersion de polymères selon l'une quelconque des revendications précédentes, dans laquelle le ou les autres émulsifiants (d) sont choisis dans le groupe des émulsifiants d'eau dans l'huile (émulsifiants E/H) ou des mélanges de ces émulsifiants ayant de préférence une valeur de HLB selon l'équation de Griffin inférieure à 9 ou des mélanges donnant ensemble une valeur de HLB inférieure à 9.

9. Procédé pour la préparation d'une dispersion de polymères selon l'une quelconque des revendications 1 à 8 par polymérisation radicalaire en émulsion dans de l'eau en présence d'au moins un cosolvant et en présence d'un système émulsifiant comprenant au moins deux émulsifiants différents issus du groupe des sulfosuccinates.

10. Procédé selon la revendication 9, dans lequel des initiateurs choisis dans le groupe constitué par les peroxydes, les hydroperoxydes organiques, les peracides et les peroxodisulfates sont utilisés pour la polymérisation radicalaire en émulsion.

11. Procédé selon la revendication 9 ou 10, dans lequel au moins un agent de transfert de chaîne choisi dans le groupe des alkylmercaptans est utilisé pour la polymérisation radicalaire en émulsion.

12. Procédé selon l'une quelconque des revendications 9 à 11, dans lequel la réaction de polymérisation est effectuée à une température de 20 °C à 100 °C et/ou dans lequel une substance tampon est ajoutée.

13. Procédé selon l'une quelconque des revendications 9 à 12, dans lequel un émulsifiant choisi dans le groupe des émulsifiants d'eau dans l'huile (émulsifiants E/H) ou des mélanges de ces émulsifiants ayant de préférence une valeur

de HLB selon l'équation de Griffin inférieure à 9 ou des mélanges donnant ensemble une valeur de HLB inférieure à 9 est ajouté une fois la polymérisation terminée.

**14.** Utilisation de dispersions de polymères selon l'une quelconque des revendications 1 à 8 pour l'inhibition du dépôt de paraffines dans des huiles minérales brutes et/ou pour l'abaissement du point d'écoulement d'huiles minérales brutes.

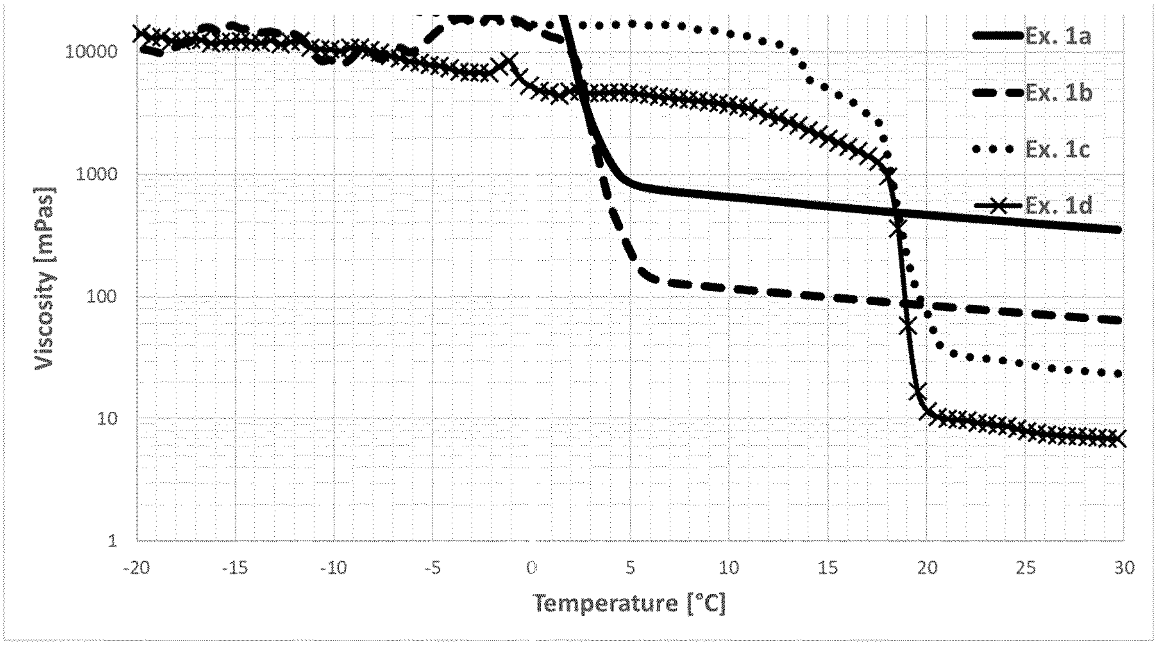


**Fig.1: Flowability of the polymer solutions in solvent naphtha S as solvent (examples 1a to 1d) as a function of temperature**

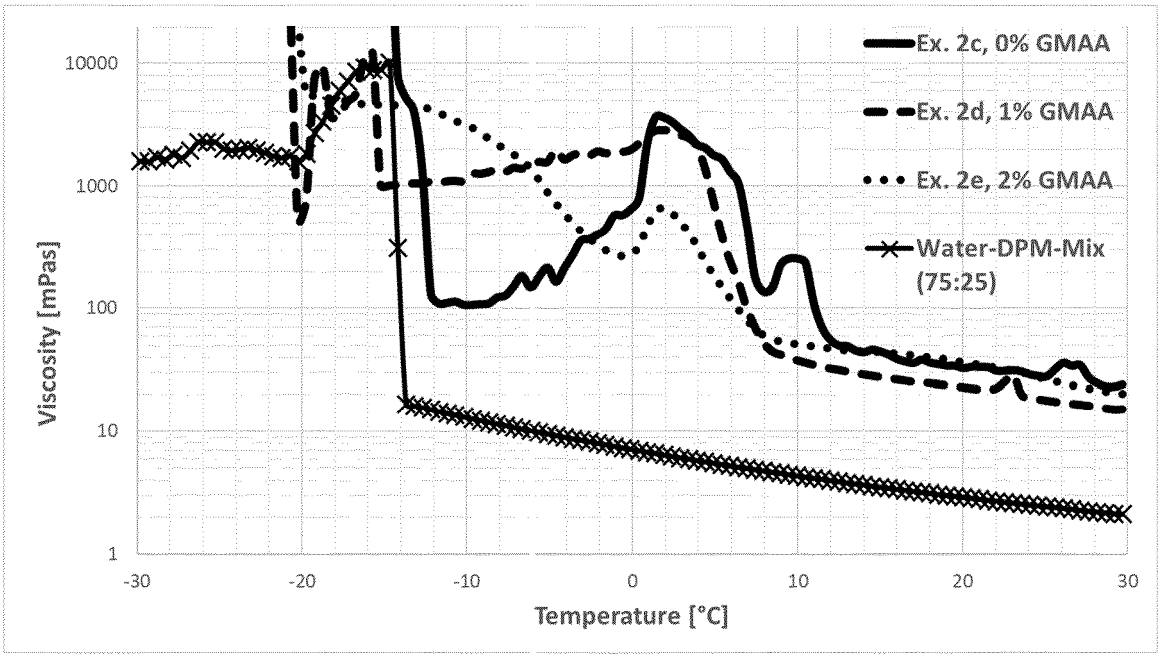


**Fig. 2: Flowability as a function of temperature (Examples 2c to 2e; variation of GMMA amounts)**

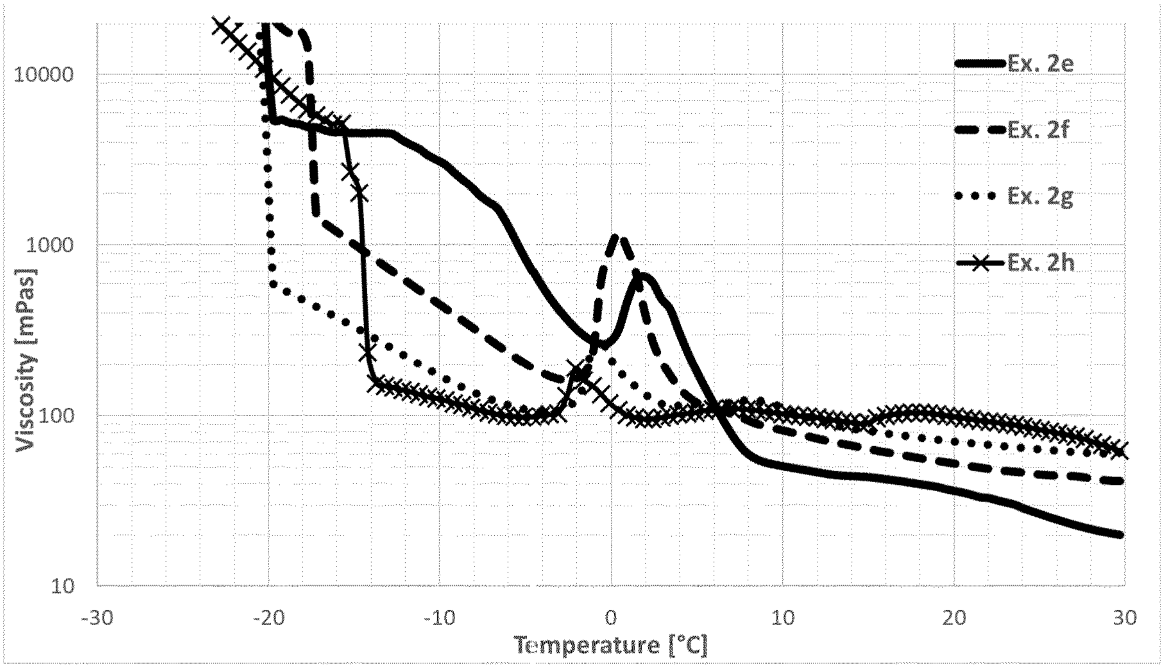


**Fig. 3: Flowability as a function of temperature (Examples 2e to 2h; variation of the amounts of sodium bistridecyl sulfosuccinate)**

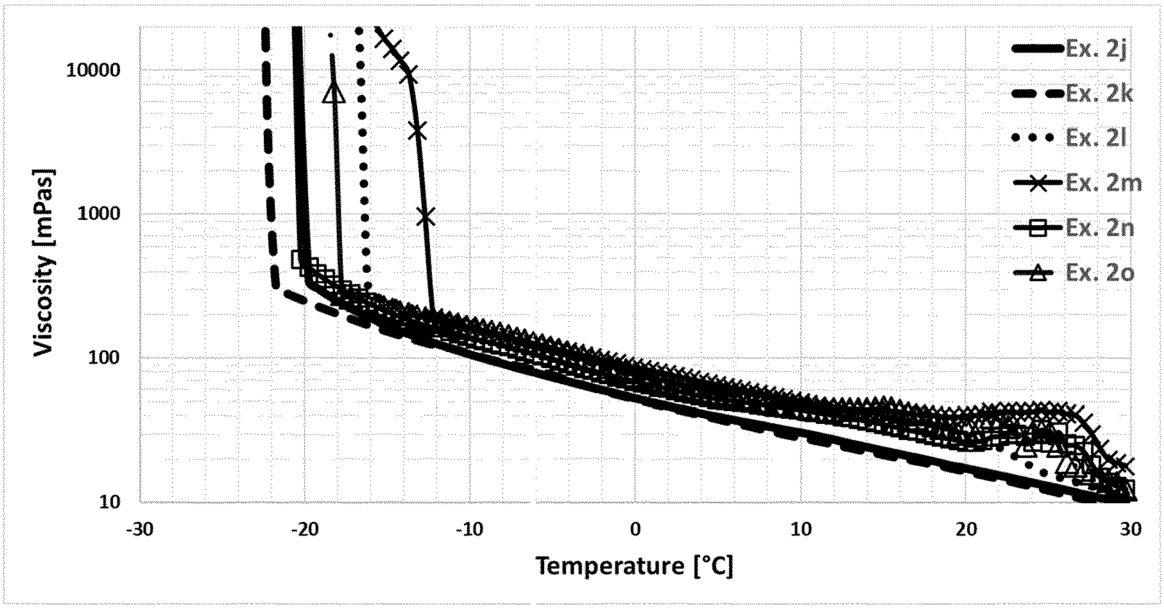


**Fig. 4: Flowability as a function of temperature (Examples 2j to 2o; variation of the amounts of sodium bis(2-ethylhexyl) sulfosuccinate)**

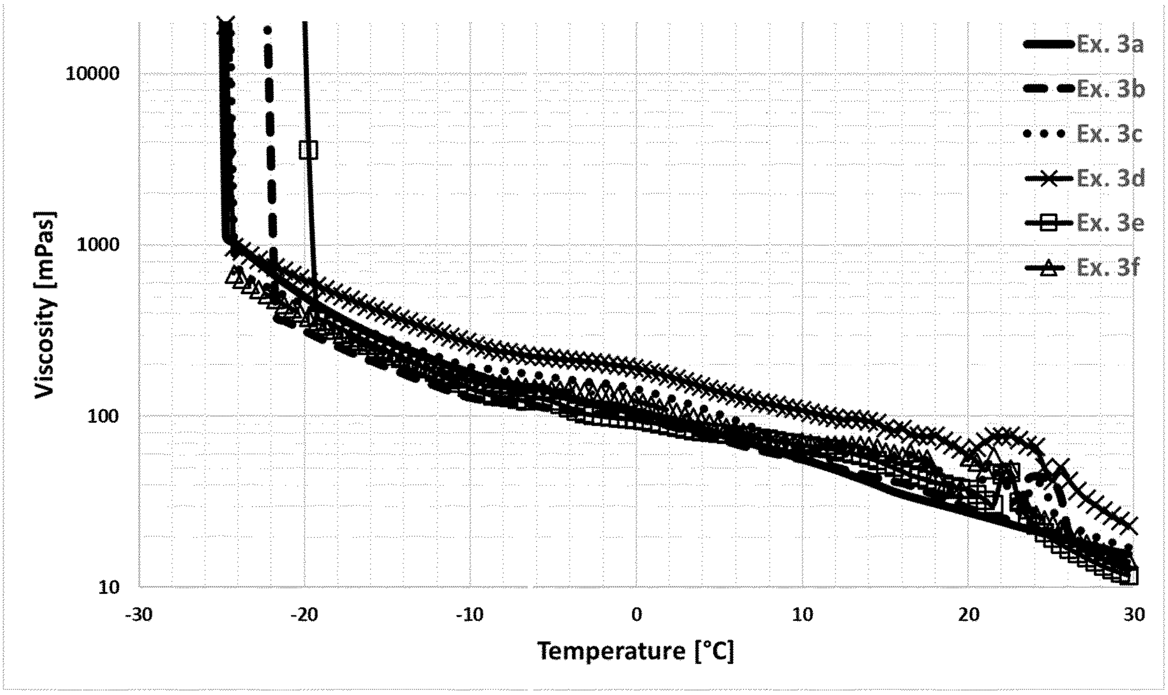


**Fig. 5: Flowability as a function of temperature (Examples 3a to 3f; combination of sodium bistridecyl sulfosuccinate and sodium bis(2-ethylhexyl) sulfosuccinate)**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9833846 A1
- US 20100025290 A1
- WO 2019057396 A1
- WO 2019048663 A1
- WO 2017153462 A1
- DE 3830913
- CN 108047868 A
- US 7790821 B2
- US 6218490 B1